# EUROPEAN PATENT APPLICATION

(11) **EP 2 453 300 A1**
(43) Date of publication of application: **16.05.2012**
(21) Application number: 10796954.5
(22) Date of filing: 29.03.2010
(51) Int. Cl.: G02F 1/13357, F21S 2/00, F21V 19/00, G02F 1/1333, F21Y 101/02

(54) **ILLUMINATING DEVICE, DISPLAY DEVICE, AND TELEVISION RECEIVER**

(30) Priority: 10.07.2009 JP 2009164102
(71) Applicant: Sharp Kabushiki Kaisha, Osaka-shi, Osaka 545-8522 (JP)
(72) Inventor: YOSHIKAWA, Takahiro, Osaka-shi, Osaka 545-8522 (JP)
(74) Representative: Müller-Boré & Partner Patentanwälte
(86) International application number: PCT/JP2010/055523
(87) International publication number: WO 2011/004643

(57) **Abstract**

A holder (11) fixes a mounting board (21) on a backlight chassis (41), while at least covering the edge (21S) of the mounting board (21) on the backlight chassis (41), said edge being in the short side direction of the mounting board.

## Description

### Technical Field

The present invention relates to illuminating devices, display devices, and television receivers.

### Background Art

A liquid crystal display device (display device) incorporating a non-luminous liquid crystal display panel (display panel) also incorporates a backlight unit for supplying light to the liquid crystal display panel. The backlight unit includes a light source of one of various types, one example being LEDs (light-emitting diodes).

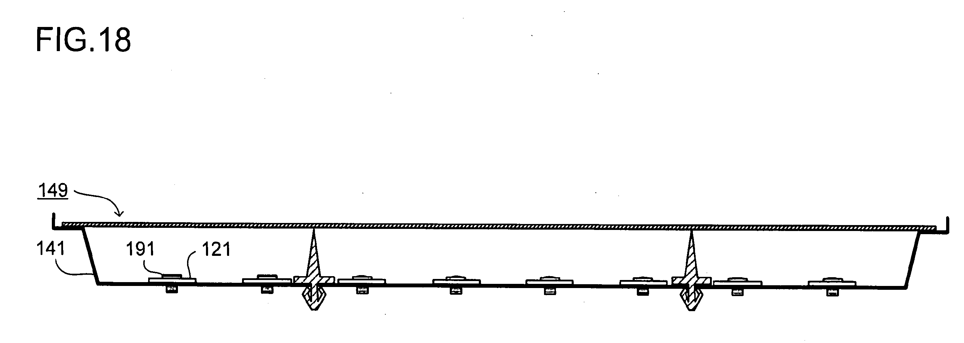

Generally, as LEDs emit light, they produce heat as well. The heat is one of the factors that lower the light emission efficiency of LEDs. To cope with this, in a backlight unit 149 as shown in Fig. 18, mounting boards 121 on which LEDs are mounted are kept in intimate contact with a backlight chassis 141 that dissipate heat. This design allows the heat present in the LEDs, and also the heat that has conducted to the mounting boards 121, to conduct to the backlight chassis 141 (that is, the heat in the LEDs and in the mounting boards 121 is rejected).

As shown in Fig. 18, in the backlight unit 149, for the fixing of the backlight chassis 141 to the mounting boards 121, fixing screws 191 are used. Such fixing using fixing screws 191 requires that at least one fixing screw 191 be used for each mounting board 121. This increases the cost of the backlight unit 149, and complicates the manufacturing process of the backlight unit 149.

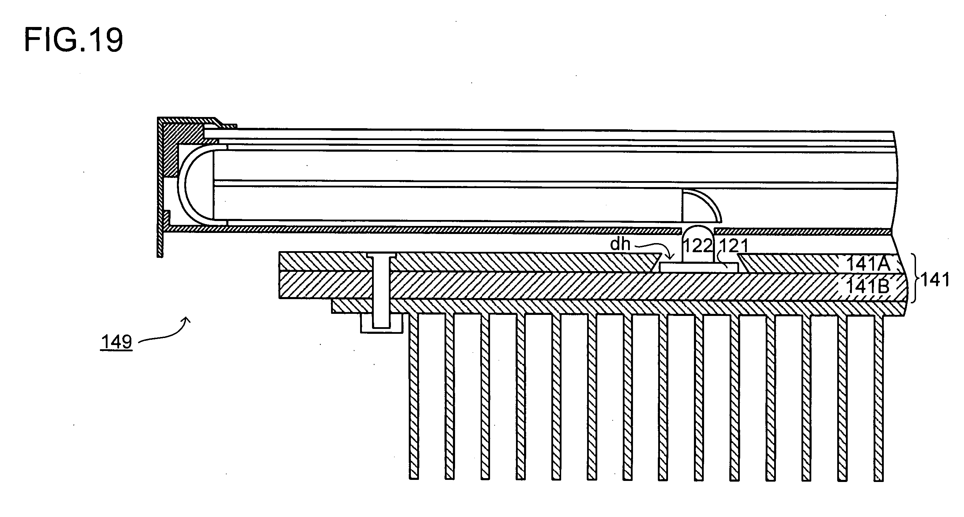

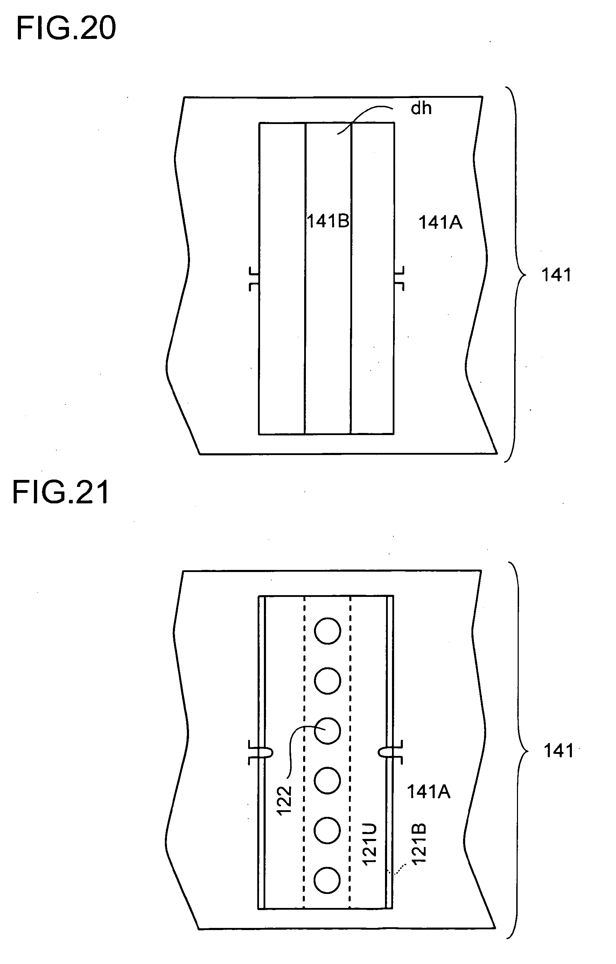

As an improvement, in the backlight unit 149 disclosed in Patent Document 1, as shown in Fig. 19, no fixing screws are used for the fixing of the mounting boards 121 to the backlight chassis 141. Specifically, as shown in Figs. 19 and 20, a first-layer chassis member 141A having an opening is laid over a second-layer chassis member 141 B so that the backlight chassis 141 has a groove dh. In the groove dh, the mounting boards 121 are fitted (see Figs. 19 and 21). With this design, not only is the heat in the LEDs 122 and in the mounting boards 122 rejected, but also, without fixing screws, the mounting boards 121 are fixed to the backlight chassis 141. This backlight unit 149 is thus not only easy to manufacture but also achieves better heat dissipation.

### List of Citations

### Patent Literature

Patent Document 1: JP-A-2008-60204

### Summary of Invention

### Technical Problem

The mounting boards 121 are each fitted with a connector for the reception of electric current from a circuit such as an external power supply. For example, in a mounting board 121 as shown in Fig. 21, a connector is typically provided on its mounting face 121U, close to an edge of the mounting board 121 along its shorter-side direction. In this mounting board 121, the light from the LEDs 122 is irregularly reflected by the connector, and this tends to lead to the problem of light amount unevenness in the light from the backlight unit 149.

The problem may be solved by fitting the connector on the reverse face 121B opposite from the mounting face 121U. Even when the connector is fitted on the reverse face 121B, however, terminals or the like that are connected to the connector may still be exposed on the mounting face 121 U and cause irregular reflection. The edges of the mounting board 121 along its shorter-side direction, which are located close to LEDs, also tend to cause irregular reflection.

The present invention has been made to solve the above problem, and aims to provide illuminating devices etc. that achieve reduced light amount unevenness.

### Solution to Problem

An illuminating device includes: a light source; a mounting board to which the light source is fitted; and a chassis to which the mounting board is fitted. Here, the illuminating device further includes a holder which fixes the mounting board to the chassis while covering at least an edge of the mounting board on the chassis along the shorter-side direction of the mounting board.

With this design, the edge of the mounting board along its shorter-side direction, which, if it receives light from the light source, tends to cause irregular reflection, is shielded by the holder. Thus, the light from the illuminating device is less likely to include light amount unevenness resulting from irregular reflection. Moreover, since a single holder placed over the mounting board can fix the mounting board to the chassis, it is possible to increase the manufacturing efficiency of the illuminating device and achieve cost reduction.

On the face of the mounting board shielded by the holder, an irregular reflection portion (for example, a connector or a terminal) may be fitted. With this design, the illuminating device produces light including less light amount unevenness.

Preferably, the mounting board includes a plurality of mounting boards, and the holder bridges over the plurality of mounting boards collectively at one end thereof and thereby engages with the plurality of mounting boards so as to keep the mounting boards immobile with respect to the chassis.

With this design, the plurality of mounting boards are kept immobile with respect to the chassis, and thus there is no need for, for example, a screw or the like for fixing each mounting board to the chassis. Thus, simply by fixing the holder to the chassis, the plurality of mounting boards are fixed with respect to the chassis.

In addition, keeping the mounting board in contact with the chassis increases the area over which heat can be dissipated, and thus the heat present in the mounting board can be rejected inexpensively. Furthermore, the holder fixes the plurality of mounting boards collectively to the chassis, and this facilitates the manufacturing of the illuminating device.

Preferably, let the face of the chassis on which the mounting board is fitted be called the fitting face, the illuminating device further includes a first engagement portion which makes contact with the mounting board and thereby restricts the movement of the mounting board in at least one direction among directions within the plane of the fitting face.

Preferably, the first engagement portion makes contact with the mounting face of the mounting board and thereby restricts the movement of the mounting board away from the fitting face.

Preferably, inside the holder, which is hollow, a reinforcing portion is formed which connects to at least two inner side faces. With this design, the holder has increased rigidity.

In addition, the reinforcing portion may be the first engagement portion.

Preferably, the holder is hollow and has an opening at bottom, and the first engagement portion is at least one of a side wall constituting the rim of the opening and a first cut formed in the side wall.

Preferably, let the part of the mounting board making contact with the first engagement portion be called the second engagement portion, the second engagement portion is at least one of the mounting face of the mounting board, an edge of the mounting board, and a second cut formed in the edge.

Preferably, the second cut includes second cuts formed respectively at one and the other of opposite ends of the mounting board, and the first cut at the one end and the first cut at the other end have an identical shape. With this design, the second cuts can be formed easily.

Preferably, the mounting board is linear, the second cut at the one end is formed in one of the two longer sides of the mounting board along the longer-side direction thereof, and the second cut at the other end is formed in the other of the two longer sides of the mounting board along the longer-side direction thereof.

With this design, a holder including first cuts corresponding to the second cuts can engage with the linear mounting board at either end thereof. Thus, two identical holders can keep the mounting board immobile, and this helps save the cost for holders. The use of identical holders alone also facilitates the manufacturing of the illuminating device.

Preferably, the holder includes holders provided respectively at one and the other of opposite ends of the mounting board, and the mounting board is sandwiched between the holders and is thereby kept immobile. With this design, the mounting board is surely kept immobile.

Preferably, inside the holder, which is hollow, a reinforcing portion is formed which connects to at least two inner side faces, and the reinforcing portion divides the space inside the holder into divided spaces while allowing the divided spaces to communicate with one another. With this design, the air inside the holder does not stagnate, and the mounting board is easier to cool.

Preferably, on the mounting face of the mounting board, a light-reflecting film is formed. Preferably, on the mounting face of the mounting board, a first reflective sheet is laid. With these designs, the light striking the mounting face is reflected to travel back out, and is thereby saved from being wasted.

Preferably, between the mounting board and the chassis, a second reflective sheet is interposed. Preferably, the chassis is formed of a light-reflecting material. With these designs, the light striking the face of the chassis where the mounting board is arranged is reflected to travel back out, and is thereby saved from being wasted.

A display device including a display panel (for example, a liquid crystal display panel) receiving light from an illuminating device as described above falls within the scope of the present invention. A television receiver incorporating such a display device falls within the scope of the present invention.

### Advantageous Effects of the Invention

According to the present invention, a holder fixes a mounting board to a chassis while hiding the edge of the mounting board along its shorter-side direction, which tends to cause irregular reflection. This permits an illuminating device to produce light including less light amount unevenness. Moreover, a single holder placed over the mounting board permits the mounting board to be fixed to the chassis, and this facilitates the manufacturing of the illuminating device.

### Brief Description of Drawings

[Fig. 1] is an exploded perspective view showing part of the backlight unit shown in Fig. 16;
[Fig. 2A] is an exploded plan view of holders and mounting boards as seen from the mounting-face side of the mounting boards;
[Fig. 2B] is an exploded plan view of holders and mounting boards as seen from the reverse-face side of the mounting boards;
[Fig. 2C] is a plan view showing how holders keep mounting boards immobile;
[Fig. 3A] is a sectional view along line A1-A1' in Figs. 2A to 2C as seen from the arrow-indicated direction;
[Fig. 3B] is a sectional view along line A2-A2' in Figs. 2A to 2C as seen from the arrow-indicated direction;
[Fig. 3C] is a sectional view along line A3-A3' in Figs. 2A to 2C as seen from the arrow-indicated direction;
[Fig. 4A] is a plan view showing an example of a mounting board;
[Fig. 4B] is a plan view showing an example of a mounting board;
[Fig. 5A] is an exploded plan view of holders and mounting boards as seen from the mounting-face side of the mounting boards;
[Fig. 5B] is an exploded plan view of holders and mounting boards as seen from the reverse-face side of the mounting boards;
[Fig. 5C] is a plan view showing how holders keep mounting boards immobile;
[Fig. 6A] is a sectional view along line B1-B1' in Figs. 5A to 5C as seen from the arrow-indicated direction;
[Fig. 6B] is a sectional view along line B2-B2' in Figs. 5A to 5C as seen from the arrow-indicated direction;
[Fig. 6C] is a sectional view along line B3-B3' in Figs. 5A to 5C as seen from the arrow-indicated direction;
[Fig. 7A] is a plan view showing an example of a mounting board;
[Fig. 7B] is a plan view showing an example of a mounting board;
[Fig. 8A] is an exploded plan view of holders and mounting boards as seen from the mounting-face side of the mounting boards;
[Fig. 8B] is an exploded plan view of holders and mounting boards as seen from the reverse-face side of the mounting boards;
[Fig. 8C] is a plan view showing how holders keep mounting boards immobile;
[Fig. 9A] is a sectional view along line C1-C1' in Figs. 8A to 8C as seen from the arrow-indicated direction;
[Fig. 9B] is a sectional view along line C2-C2' in Figs. 8A to 8C as seen from the arrow-indicated direction;
[Fig. 9C] is a sectional view along line C3-C3' in Figs. 8A to 8C as seen from the arrow-indicated direction;
[Fig. 10A] is a plan view showing how a holder keeps mounting boards immobile;
[Fig. 10B] is a sectional view of the holder shown in Fig. 10A along line D-D' as seen from the arrow-indicated direction;
[Fig. 10C] is a sectional view showing another example of Fig. 10B;
[Fig. 11A] is a plan view showing how a holder keeps mounting boards immobile;
[Fig. 11B] is a sectional view of the holder shown in Fig. 11A along line E-E' as seen from the arrow-indicated direction;
[Fig. 12A] is a plan view showing how a holder keeps mounting boards immobile;
[Fig. 12B] is a sectional view of the holder shown in Fig. 12A along line F-F' as seen from the arrow-indicated direction;
[Fig. 12C] is a sectional view showing another example of Fig. 12B;
[Fig. 13] is a perspective view of the bottom face of a backlight chassis;
[Fig. 14] is a perspective view showing card-edge type connectors;
[Fig. 15] is a perspective view showing a backlight chassis including projecting pieces;
[Fig. 16] is an exploded perspective view of a liquid crystal display device;
[Fig. 17] is an exploded perspective view of an LCD television incorporating a liquid crystal display device;
[Fig. 18] is a sectional view of a conventional backlight unit;
[Fig. 19] is a sectional view of a conventional liquid crystal display device;
[Fig. 20] is a plan view of a heat sink plate; and
[Fig. 21] is a plan view of a heat sink plate on which a mounting board is fitted.

### Description of Embodiments

### [Embodiment 1]

The present invention will be described below by way of embodiments with reference to the accompanying drawings. For convenience' sake, hatching and reference signs are occasionally omitted, in which case reference is to be made to any other relevant drawing; also for convenience' sake, hatching is occasionally used elsewhere than in a sectional view.

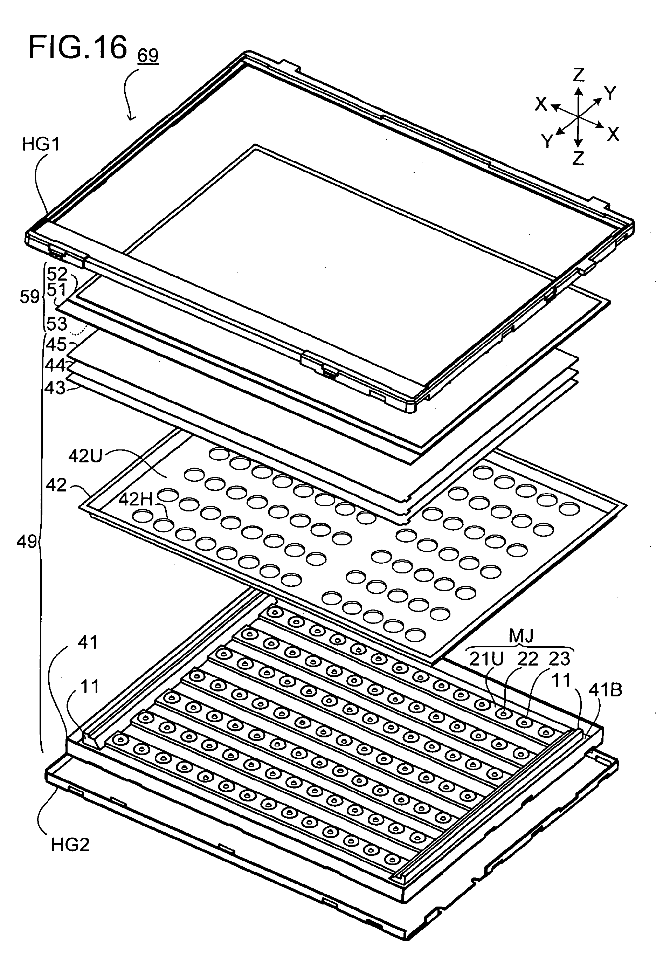

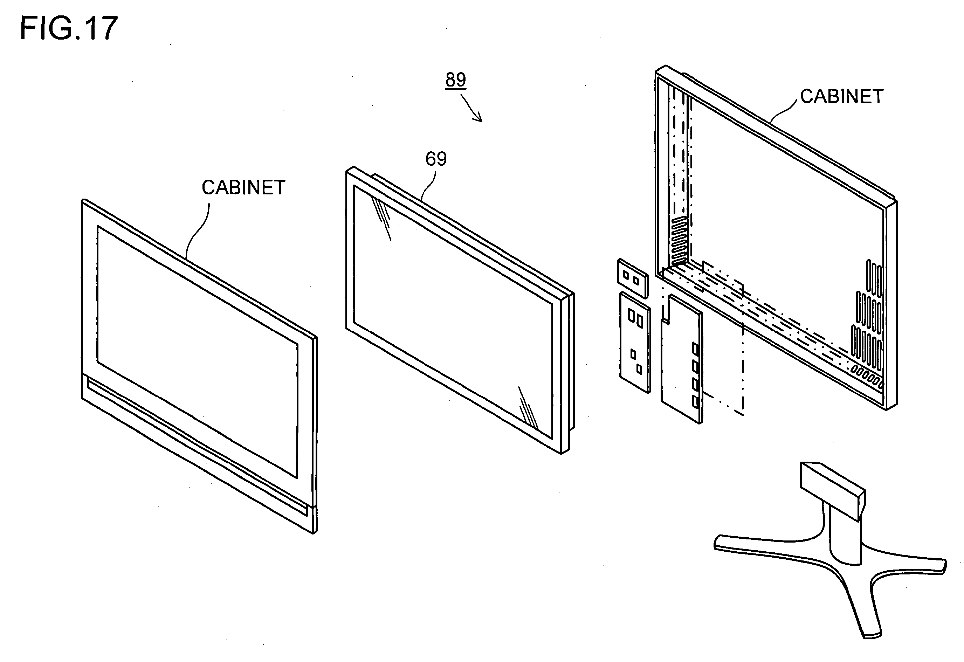

Fig. 17 shows an LCD (liquid crystal display) television 89 incorporating a liquid crystal display device (display device) 69. The LCD television 89 receives a television broadcast signal and displays an image; thus, the LCD television 89 is a television receiver. Fig. 16 is an exploded perspective view showing the liquid crystal display device. As shown there, the liquid crystal display device 69 includes a liquid crystal display panel (display panel) 59, a backlight unit (illuminating device) 49 which supplies light to the liquid crystal display panel 59, and a housing HG in which (a front housing HG1 and a rear housing HG2 between which) those are held.

The liquid crystal display panel 59 is composed of an active matrix substrate 51, which includes switching elements such as TFTs (thin-film transistors), and a counter substrate 52, which is disposed opposite the active matrix substrate 51, bonded together with a sealing member (not shown). The gap between the two substrates 51 and 52 is filled with liquid crystal (not shown).

The light-input face of the active matrix substrate 51 and the light-output face of the counter substrate 52 are each fitted with a polarizing film 53. Structured as described above, the liquid crystal display panel 59 displays an image by exploiting the variation of transmittance resulting from the inclination of liquid crystal molecules.

Next, a description will be given of the backlight unit 49, which is disposed immediately under the liquid crystal display panel 59. The backlight unit 49 includes LED modules (light-emitting modules) MJ, a backlight chassis 41, holders 11, a reflective sheet 42, a diffusive plate 43, a prism sheet 44, and a microlens sheet 45.

The LED modules MJ include mounting boards 21, LEDs (light-emitting diodes) 22, and lenses 23.

Each mounting board 21 is a rectangular, plate-shaped board (that is, a linear board), and on its mounting face 21U, a plurality of electrodes (not shown) are arranged. On these electrodes, the LEDs 22 as light-emitting elements are fitted. On the mounting face 21U of the mounting board 21, a resist film (not shown) as a protective film is formed. The resist film is preferably, but not limited to, white so as to be reflective.

The reason is that, then, the light striking the resist film is reflected on the resist film to travel back out, eliminating the absorption of light by the mounting board 21, which is a cause of light amount unevenness. In a case where no resist film is formed, covering the mounting face 21 U with a reflective sheet (first reflective sheet) produces a similar effect to that provided by a resist film. A reflective sheet may be used in addition to a resist film.

A plurality of mounting boards 21 are arranged side by side in a direction crossing their longer-side direction (linear direction). The longer-side direction will be referred to as the X direction, the arrangement direction will be referred to as the Y direction, and the direction crossing both the X and Y directions will be referred to as the Z direction. An edge of a mounting board 21 along its longer-side direction will be referred to as a longer-side edge 21L, and an edge of a mounting board 21 along its shorter-side direction (aligned with the Y direction) will be referred to as a shorter-side edge 21S.

The LEDs 22 serve as a light source, and emit light by receiving electric current via the electrodes on the mounting boards 21. The LEDs 22 may be of any of various types including those mentioned below. For example, the LEDs 22 may be those including an LED chip (light-emitting chip) emitting blue light combined with a phosphor (fluorescent substance) receiving the light from the LED chip and emitting yellow light by fluorescence (there is no particular limitation on the number of LED chips per LED). These LEDs 22 produce white light as a mix of the light from the LED chip emitting blue light and the light emitted by fluorescence.

The phosphor used in the LEDs 22, however, is not limited to one that emits yellow light by fluorescence. For example, the LEDs 22 may instead include an LED chip emitting blue light combined with phosphors receiving the light from the LED chip and emitting green and red light, respectively, by fluorescence, and produce white light as a mix of the blue light from the LED chip and the light (green and red light) emitted by fluorescence.

The LED chip used in the LEDs 22 is not limited to one that emits blue light. For example, the LEDs 22 may instead include a red LED chip emitting red light and a blue LED chip emitting blue light combined with a phosphor receiving the light from the blue LED chip and emitting green light by fluorescence. These LEDs 22 produce white light as a mix of the red light from the red LED chip, the blue light from the blue LED chip, and the green light emitted by fluorescence.

The LEDs 22 may include no phosphor at all. For example, the LEDs 22 may include a red LED chip emitting red light, a green LED chip emitting green light, and a blue LED chip emitting blue light, and produce white light as a mix of the light from all those LED chips.

Thirteen (13) LEDs 22 are arranged in a row in the X direction, and are electrically connected in series. These 13 LEDs 22 connected in series are electrically connected in parallel with another 13 LEDs 22 connected in series in a row adjacent in the Y direction. The LEDs 22, thus arrayed in a matrix, are parallel-driven.

The lenses 23 receive and transmit (let pass) the light from the LEDs 22. Specifically, each lens 23 has, on its rear-face (light-input face) side, a housing recess that can house an LED 22, and fits over the LED 22 with the housing recess aligned with the LED 22.

Thus, the LED 22 is embedded in the lens 23 so that the light from the LED 22 is surely supplied into the lens 23. Most of the light thus supplied emerges out of the lens 23 via the lens surface. There is no particular limitation to the material of the lens 23, an example being acrylic resin.

As shown in Fig. 16, the backlight chassis 41 is, for example, a box-shaped member, the bottom face (fitting face) 41B of which is laid with mounting boards 21 (a package composed of LED modules MJ fitted on a backlight chassis 41 is referred to as an electronic package PG). Thus, the backlight chassis 41 houses a plurality of LED modules MJ. The bottom face 41B of the backlight chassis 41 may additionally be fitted with support pins (not shown in Fig. 16) for supporting the diffusive plate 43, the prism sheet 44, and the microlens sheet 45.

The material of the backlight chassis 41 may be metal or resin. In a case where it is a metal with comparatively low reflectance, it is preferable that a reflective sheet (one with a reflectance of 85% or more, more preferably 95% or more) be interposed between the bottom face 41 B of the backlight chassis 41 and the mounting board 21.

The reason is that, owing to the provision of such a bottom-face reflective sheet (second reflective sheet), any part of the light emerging from the lens 23 that travels toward the bottom face 41B of the backlight chassis 41 is reflected on the reflective sheet so as to be used as backlight without being wasted. In a case where the backlight chassis 41 is formed of a resin with approximately the same reflectivity as the reflective sheet, the reflective sheet may be omitted (even in a case where the backlight chassis 41 is formed of a reflective resin, a reflective sheet may additionally be interposed between the bottom face 41B of the backlight chassis 41 and the mounting board 21.

The holders 11 are placed over the mounting boards 21 on the backlight chassis 41 (specifically, on the bottom face 41 B), and thereby fix them to the backlight chassis 41. Specifically, the holders 11 are fixed to the backlight chassis 41 with parts of the mounting boards 21 (for example, ends of the mounting boards 21 in their longer-side direction) interposed in between, and thereby the mounting boards 21 are fixed to the bottom face 41B of the backlight chassis 41 (the details will be given later).

In a case where the holders 11 are disposed at both (one and the other) ends of the mounting boards 21 in their longer-side direction, the diffusive plate 43, the prism sheet 44, and the microlens sheet 45 are stacked on top portions UW of the holders 11 so as to be supported on the holders 11.

There is no particular limitation on how the holders 11 are fixed (connected) to the backlight chassis 41. For example, the holders 11 and the backlight chassis 41 may be tightened together with screws. Instead, a connecting mechanism may be formed between the holders 11 and the backlight chassis 41 so that the connecting mechanism connects them together. Instead, a fixing member for connecting the liquid crystal display panel 59 and the backlight chassis 41 together may be so designed as to fix not only the liquid crystal display panel 59 but also the holders 11 to the backlight chassis 41.

The reflective sheet 42 is a box-shaped optical sheet that has a reflective surface 42U on its bottom face, and covers a plurality of LED modules MJ arrayed in a matrix with the face of the reflective sheet 42 reverse to the reflective surface 42U facing the LED modules MJ. The reflective sheet 42 has clearance apertures 42H at positions corresponding to the lenses 23 of the LED modules MJ so that the lenses 23 are exposed through the reflective surface 42U (apertures for exposing the above-mentioned support pins or the like may also be formed).

Thus, any part of the light emerging from the lenses 23 that travels toward the bottom face 41B of the backlight chassis 41 is reflected on the reflective surface 42U of the reflective sheet 42 so as to travel away from the bottom face 41 B. In this way, owing to the provision of the reflective sheet 42, the light from the LEDs 22 travels toward the diffusive plate 43 opposite the reflective surface 42U without being wasted.

The diffusive plate 43 is an optical sheet stacked on the reflective sheet 42, and diffuses the light emitted from the LED modules MJ and the light reflected from the reflective surface 42U. That is, the diffusive plate 43 diffuses the planar light formed by the plurality of LED modules MJ so as to distribute light over the entire area of the liquid crystal display panel 59.

The prism sheet 44 is an optical sheet stacked on the diffusive plate 43. The prism sheet 44 has, for example, triangular prisms, each extending in one direction (linearly), arranged side by side, within the plane of the sheet surface, in a direction crossing that one direction. Thus, the prism sheet 44 modifies the propagation properties of the light from the diffusive plate 43. Preferably, the prisms extend in the Y direction, that is, in the direction in which the mounting boards 21 are arranged side by side, and are arranged side by side in the X direction, that is, in the direction in which the mounting boards 21 extend.

The microlens sheet 45 is an optical sheet stacked on the prism sheet 44. The microlens sheet 45 has, dispersed in it, fine particles that refract and thereby scatter light. Thus, the microlens sheet 45 prevents the light from the prism sheet 44 from concentrating locally, and thereby reduces differences between bright and dim parts (light amount unevenness).

In the backlight unit 49 structured as described above, the planar light formed by the plurality of LED modules MJ is passed through the plurality of optical sheets 43 to 45 and supplied to the liquid crystal display panel 59. Receiving the light (backlight) from the backlight unit 49, the liquid crystal display panel 59 offers improved display functions.

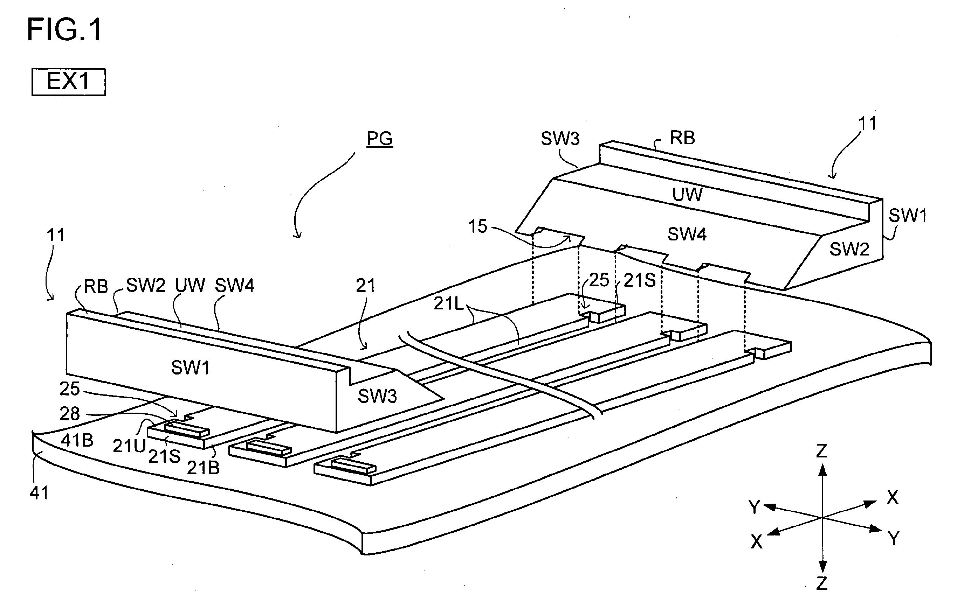

Now, a detailed description will be given of the holders 11 and the mounting boards 21 of the LED modules MJ, with reference to Figs. 1, 2A to 2C, and 3A to 3C (the backlight unit 49 shown in these diagrams will be dealt with as Embodiment 1 (EX 1)).

Fig. 1 is an exploded perspective view of part of the backlight unit 49 shown in Fig. 16. For convenience' sake, LED modules MJ are represented mostly by mounting boards 21 alone. Also for convenience' sake, the holders 11 are assumed to be so sized as to fit, as shown in the diagrams, three mounting boards 21 to the backlight chassis 41.

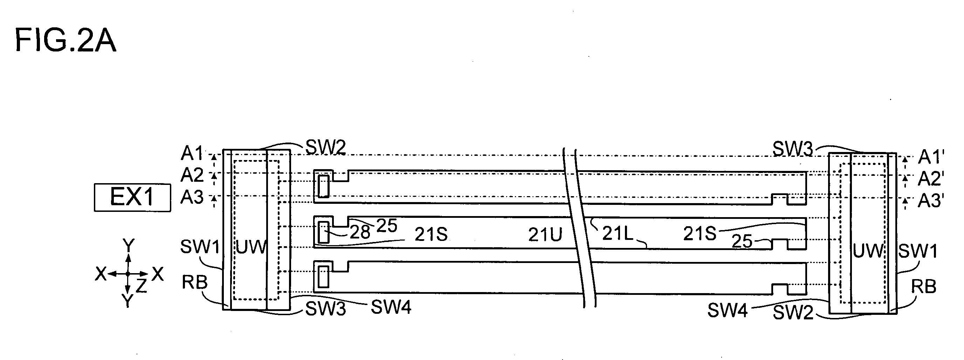

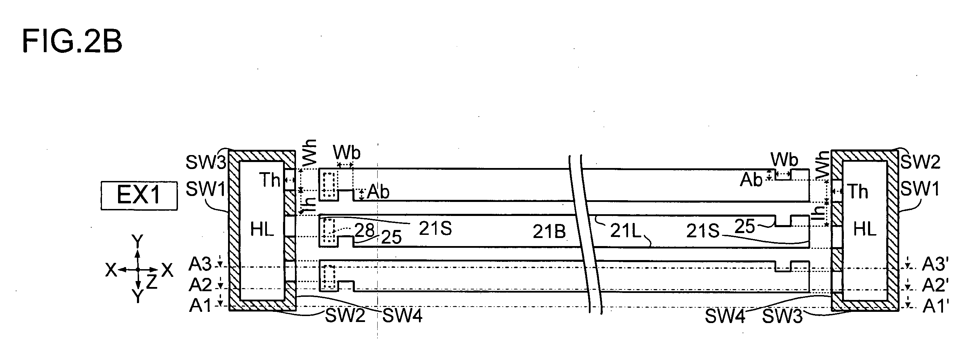

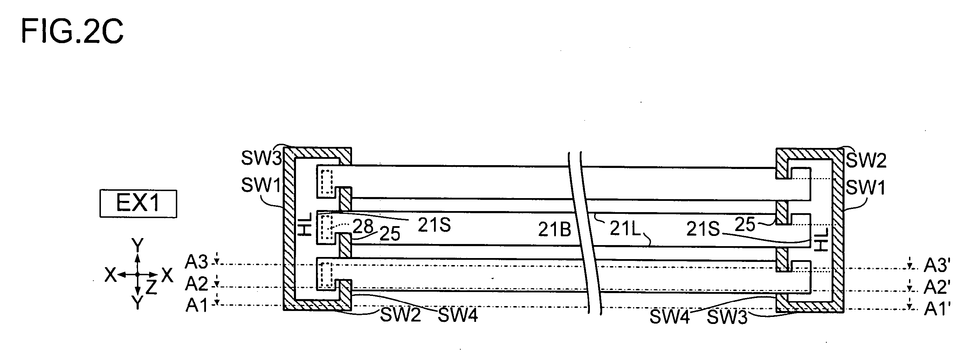

Fig. 2A is an exploded plan view (exploded front view) as seen from the mounting face 21U side of the mounting boards 21. Fig. 2B is an exploded plan view (exploded front view) as seen from the reverse face 21B side of the mounting boards 21 opposite from the mounting face 21U. Fig. 2C is a plan view showing how the holders 11 keep the mounting boards 21 immobile (as seen from the reverse face 21 B side of the mounting boards 21).

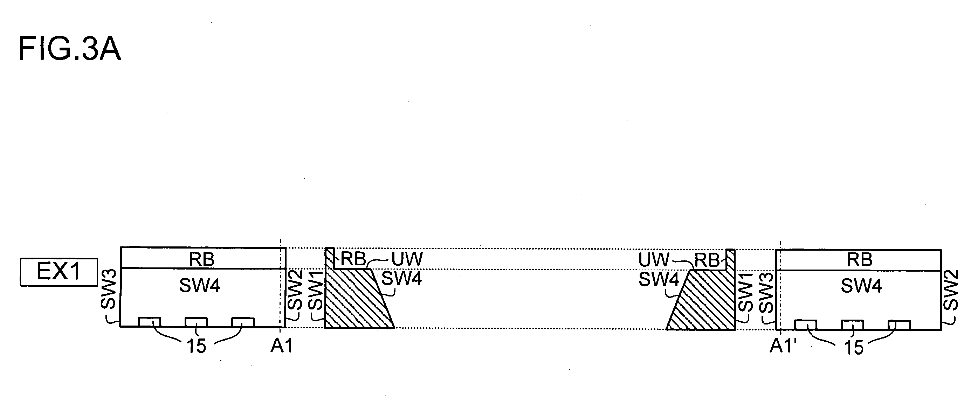

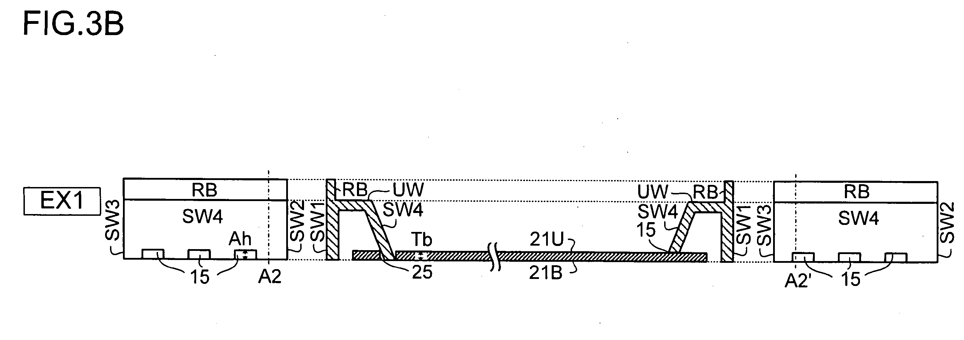

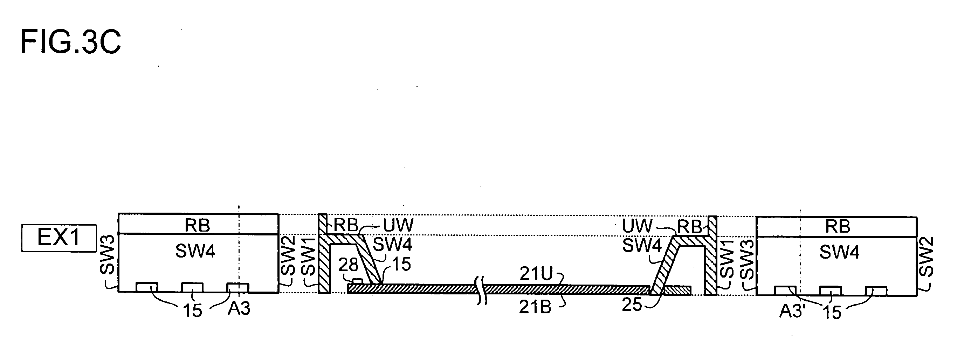

Fig. 3A is a sectional view along line A1-A1' in Figs. 2A to 2C as seen from the arrow-indicated direction. Fig. 3B is a sectional view along line A2-A2' in Figs. 2A to 2C as seen from the arrow-indicated direction. Fig. 3C is a sectional view along line A3-A3' in Figs. 2A to 2C as seen from the arrow-indicated direction (these diagrams are each accompanied with a side view of the holders 11, with their section indicated by hatching).

As shown in these diagrams, the holder 11 is bar-shaped, and has a hollow structure. Specifically, the holder 11 has four side walls SW1 to SW4 and a top portion UW. The four side walls SW1 to SW4 rise from the bottom face 41B of the backlight chassis 41, and couple together to form a loop. The top portion UW connects to the top edge of the side walls SW1 to SW4 forming a loop, so as to close the hollow space formed by the four side walls SW1 to SW4.

Of the four side walls SW1 to SW4, three SW1 to SW3 rise in the same direction, while the fourth SW4 rises in a direction inclined relative to the direction in which the other three SW1 to SW3 rise. Specifically, the side wall SW4 is inclined as if leaning against the side wall SW1, which is the middle one of the three side walls SW1 to SW3 coupled one to the next, and as a result the side wall SW4 rises in a direction inclined relative to the direction in which the three SW1 to SW3 rise (the overall shape formed by the four side walls SW1 to SW4 forming a loop thus tapers off).

The top portion UW has a rib RB. The rib RB has a total length equal to the width of the outer side face of the side wall SW1, and has a face flush with that outer side face. The face of the rib RB at one end in its total-length direction is flush with the outer side face of the side wall SW2, and the face of the rib RB at the other end in its total-length direction is flush with the outer side face of the side wall SW3 (the face of the rib RB at one end has shorter sides than the outer side face of the side wall SW2, and the face of the rib RB at the other end has shorter sides than the outer side face of the side wall SW3).

Thus, the rib RB is elevated from the surface of the top portion UW along its edge abutting the side wall SW1, so as to be beam-shaped. The rib RB restricts the position of the optical sheets 43 to 45 placed on the top portion UW.

The holder 11 has an opening HL around the edge of the side walls SW1 to SW4 where the top portion UW is not disposed. That is, the holder 11 is a hollow lid having an opening HL at the bottom. In the rim of the opening HL (that is, in the edge of the side walls SW1 to SW4 forming a loop), holder-side cuts (first cuts) 15 are formed which engage with the mounting boards 21.

The holder-side cut (first cut) 15 is, for example, shaped like a square bracket ("["), and is formed in the side wall SW4 defining part of the opening HL. Specifically, an indentation is made from the edge of the side wall SW4 defining the rim of the opening HL toward the top portion UW, and thereby the holder-side cut 15 is formed (the depth Ah of the indentation is slightly greater than the thickness Tb of the mounting board 21). The number of holder-side cuts 15 corresponds to the number of mounting boards 21 which are to be fixed to the backlight chassis 41. Thus, as shown in Figs. 3A to 3C, the side wall SW4 is comb-shaped.

On the other hand, in the mounting board 21, board-side cuts (second cuts) 25 are formed which engage with the holder-side cuts 15. The board-side cut 25 is, for example, shaped like a square bracket ("["), and is formed as a result of an indentation being made from one longer-side edge 21L of the mounting board 21 toward the other longer-side edge 21L. The depth Wb of the board-side cut 25 is slightly greater than the thickness Th of the side wall 4 of the holder 11.

The width Wh of the holder-side cut 15 is determined to suit the minimal length from the bottom of the board-side cut 25 to the other longer-side edge 21L of the mounting board 21. Specifically, the width Wh of the holder-side cut 15 is slightly greater than the difference between the shorter-side length of the mounting boards 21 (the length of the shorter-side edge 21S) and the depth Ab of the board-side cut 25. The interval Ih between adjacent holder-side cuts 15 in the holder 11 is greater than the depth Ab of the board-side cut 25.

Owing to the formation of the holder-side cut 15 and the board-side cut 25, the holder 11 and the mounting board 21 (and hence the LED module MJ) engage with each other.

For example, the mounting board 21 is arranged on the bottom face 41B of the backlight chassis 41 such that the board-side cut 25 is located at a position where the holder-side cut 15 in the holder 11 will be located. When the holder 11 is placed over the mounting board 21 on the backlight chassis 41, the bottom of the holder-side cut 15 is aligned with the part of the mounting face 21 U located in the direction in which the board-side cut 25 runs, so that the contour of the holder-side cut 15 fits around, and thus engages with, the part of the mounting board 21 from the bottom of the board-side cut 25 to the edge (longer-side edge 21L), the one opposite from that bottom, of the mounting board 21 along its longer-side direction (see Fig. 2C). Thus, the holder 11, while covering (hiding) the shorter-side edge 21S of the mounting board 21, fixes the mounting board 21 to the backlight chassis 41.

That is, the holder 11 bridges over a plurality of mounting boards 21 collectively at one end (for example, one end of the mounting boards 21 in their longer-side direction), and thereby engages with the plurality of mounting boards 21, so as to keep the mounting boards 21 immobile with respect to the backlight chassis 41.

With this design, the shorter-side edge 21S (the edge along the shorter-side direction) of the mounting board 21, which tends to cause irregular reflection if it receives the light from the LED 22, is shielded by the holder 11. Thus, the light from the backlight unit 49 no longer contains irregularly reflected light ascribable to the shorter-side edge 21S, and accordingly the backlight unit 49 produces light including less light amount unevenness.

The mounting board 21 includes wiring (not shown) for supplying electric current to the LEDs 22, and a connector 28 for receiving electric current from an external power supply is connected to the wiring. Preferably, therefore, as shown in Fig. 2C, the holder 28 too is shielded. The reason is that the holder 28 too tends to irregularly reflect the light from the LEDs 22 (this design is effective even in a case where the connector 28 is formed of a light-absorbing material).

In the backlight unit 49 structured as described above, a plurality of mounting boards 21 are kept immobile with respect to the backlight chassis 41, and thus there is no need for a screw or the like for fixing each mounting board 21 to the backlight chassis 41. Thus, solely with the screws with which the holder 11 is fixed to the backlight chassis 41, the plurality of mounting boards 21 are fixed to the backlight chassis 41.

Accordingly, forming the backlight chassis 41 out of a material with comparatively high heat dissipation (for example, metal) permits the backlight unit 49 to reject the heat present in the LED modules MJ (that is, in the LEDs 22 and the mounting boards 21) inexpensively without the use of screws or the like. In addition, since the holder 11 fixes a plurality of mounting boards 21 collectively to the backlight chassis 41, the backlight unit 49 is easy to manufacture.

In the design described above, where the mounting board 21 is kept immobile by the holder 11 with respect to the backlight chassis 41, the movement of the mounting board 21 in the X direction is restricted by the contact between the side wall SW4 (specifically, the outer and inner side faces of the side wall SW4) and the opposite edges in the bracket-like contour of the board-side cut 25. The movement of the mounting board 21 in the Y direction is restricted by the contact between the opposite edges in the contour of the holder-side cut 15 and the bottom of the board-side cut 25 and the longer-side edge 21L, the one opposite from that bottom, of the mounting board 21.

That is, the outer and inner side faces of the side wall SW4 and the opposite edges in the contour of the holder-side cut 15 make contact with the mounting board 21, and thereby restrict the movement of the mounting board 21 in the X and Y directions among directions within the plane of the bottom face 41 B of the backlight chassis 41. Here, the side wall SW4 defining the rim of the opening HL, and the holder-side cut 15 formed in the side wall SW4, constitute a first engagement portion.

Moreover, in the side wall SW4 including the holder-side cut 15 constituting the first engagement portion, the bottom of the holder-side cut 15 makes contact with the mounting face 21 U, and thereby restricts the movement of the mounting board 21 in the Z direction. Thus, the mounting face 21 U, the edge (for example, longer-side edge 21L) of the mounting board 21, and the board-side cut 25 formed in that edge make contact with the side wall SW4, and thereby the mounting board 21 is kept immobile not only in directions within the plane of the bottom face 41B of the backlight chassis 41 but also in directions crossing those directions within the plane (the mounting face 21U, the edge of the mounting board 21, and the board-side cut 25 formed in that edge constitute a second engagement portion).

In the above description, the holders 11 are disposed at both ends of the mounting boards 21 in their longer-side direction. Thus, the mounting boards 21 are sandwiched between two holders 11, and are thereby kept immobile more stably. This, however, is not meant as any limitation.

For example, so long as designed like the holders 11 shown in Fig. 1, a single holder 11 can keep a plurality of mounting boards 21 immobile in all directions including the X, Y, and Z directions simultaneously as described above. Placing the single holder 11 over the mounting boards 21 so that the mounting boards 21 are fixed to the backlight chassis 41 helps improve the manufacturing efficiency of the backlight unit 49 (the manufacturing efficiency is improved compared with, for example, in a case where each mounting board 21 is fitted with fixing screws at both ends).

In a case where fixing screws or the like are used to fix mounting boards 21 to the backlight chassis 41, a plurality of fixing screws or the like are needed, and this tends to lead to higher cost. By contrast, in a case where a holder is used to fix mounting boards 121 to the backlight chassis 41, no fixing screws or the like are needed, and this helps achieve cost reduction.

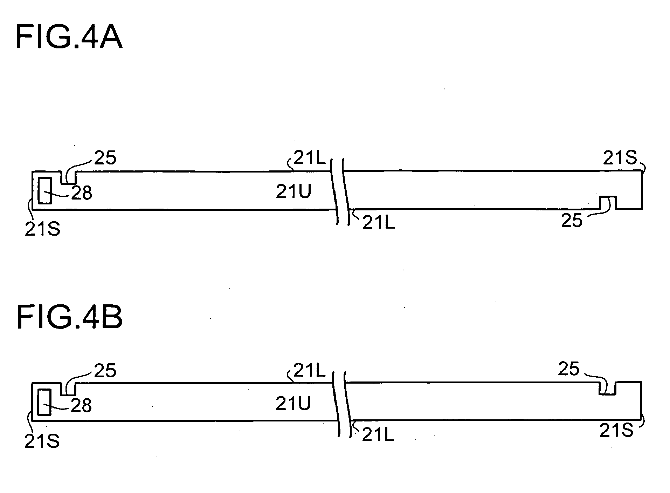

In a case where two holders 11 are used to keep a plurality of mounting boards 21 immobile, as shown in Fig. 4A, the board-side cuts 25 formed at both ends of each mounting board 21 in its longer-side direction have the same shape. This helps simplify the processing for forming the board-side cuts 25 in the mounting boards 21.

Moreover, as shown in Fig. 4A, the board-side cut 25 at one end of each mounting board 21 in its longer-side direction is formed in one of its two longer-side edges 21L, and the board-side cut 25 at the other end of each mounting board 21 in its longer-side direction is formed in the other of its two longer-side edges 21L.

With this design, as shown in Fig. 1, the holder 11 disposed at one end of the mounting boards 21 and the holder 11 disposed at the other end of the mounting boards 21 may be identically designed (that is, by use of holders 11 of a single design, the mounting boards 21 can be fixed at both ends in their longer-side direction). This, however, is not meant as any limitation; as shown in Fig. 4B, the board-side cuts 25 may be formed in one longer-side edge 21L alone, at both ends respectively.

The side wall SW4 of the holder 11 is inclined relative to the side wall SW1 opposite it. This, however, is not meant as any limitation. For example, the side wall SW4 may be parallel to the side wall SW1. In a case where the holder 11 is formed of a light-reflecting material, however, if the outer side face of the side wall SW4 is inclined toward the liquid crystal display panel 59 (so as to look up to it), the light from the LEDs 22 is reflected on the outer side face so as to be more likely to travel toward the liquid crystal display panel 59.

### x[Embodiment 2]

A second embodiment will now be described. Such members as find their functional counterparts in Embodiment 1 are identified by the same reference signs, and no overlapping description will be repeated.

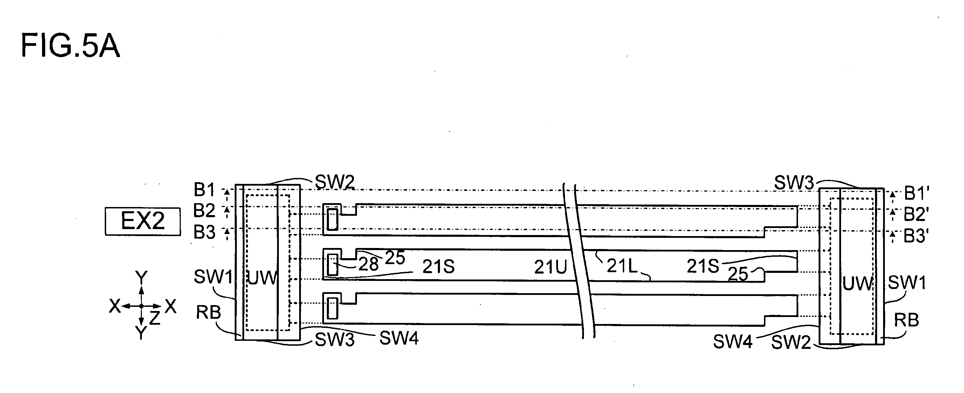

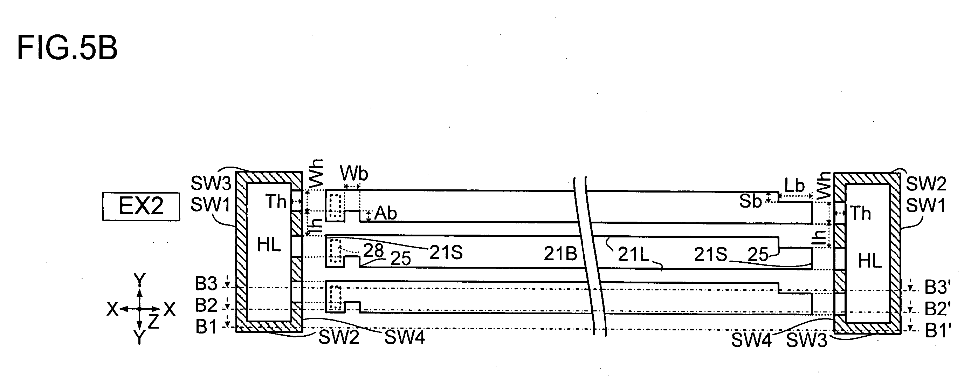

In Embodiment 1, the board-side cut 25 is formed as an indentation that is made only from a longer-side edge 21L of the mounting board 21. This, however, is not meant as any limitation. For example, as shown in Figs. 5A to 5C, the board-side cut 25 may be formed as an indentation that is made both from a longer-side edge 21L and from a shorter-side edge 21S. Specifically, the board-side cut 25 may have an L-shaped contour.

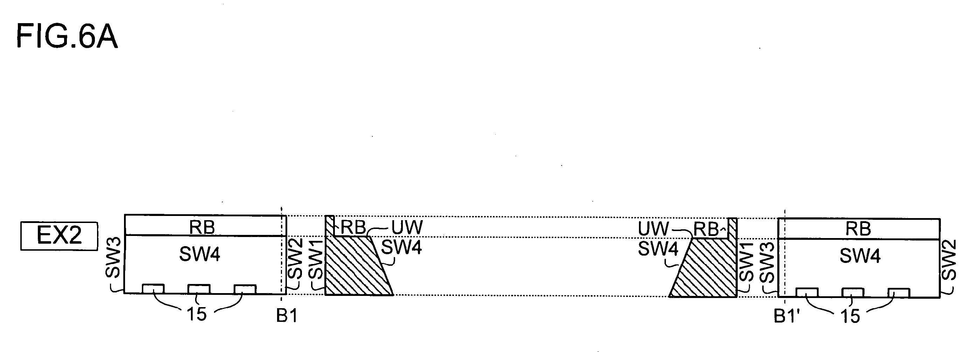

Such a board-side cut 25 will now be described with reference to Figs. 5A to 5C and 6A to 6C (the backlight unit 49 shown in these diagrams is dealt with as a second embodiment (EX 2)). Figs. 5A to 5C are views similar to Figs. 2A to 2C respectively.

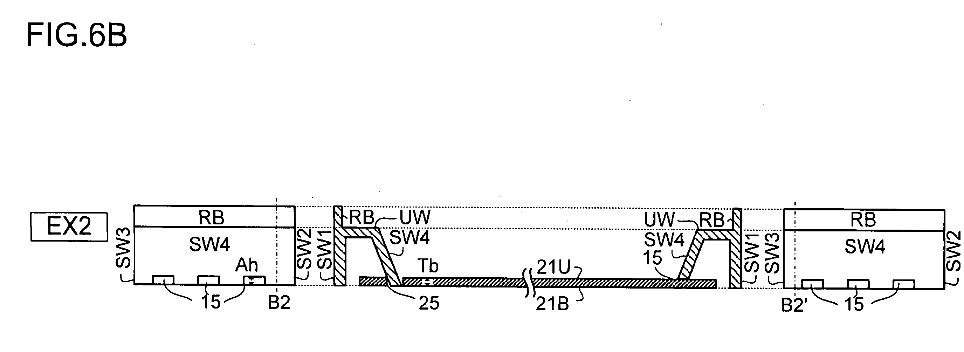

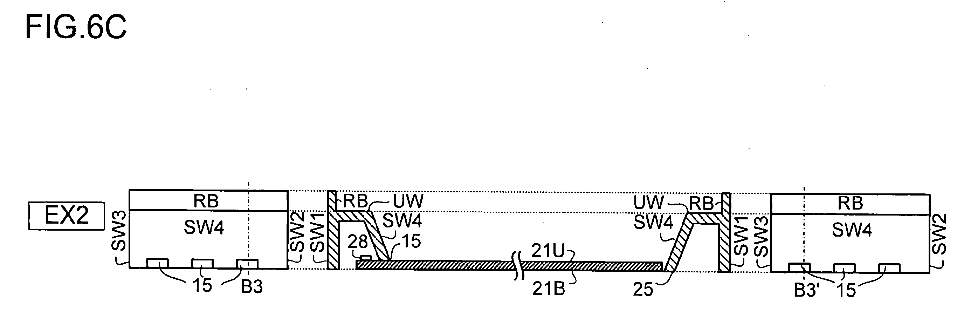

Fig. 6A is a sectional view along line B1-B1' in Figs. 5A to 5C as seen from the arrow-indicated direction. Fig. 6B is a sectional view along line B2-B2' in Figs. 5A to 5C as seen from the arrow-indicated direction. Fig. 6C is a sectional view along line B3-B3' in Figs. 5A to 5C as seen from the arrow-indicated direction (these diagrams are each accompanied with a side view of the holders, with their section indicated by hatching).

As shown in Figs. 5A to 5C and 6A to 6C, the holders 11 at both ends are the same as the holders 11 described in connection with Embodiment 1. The board-side cut 25 formed at one end of each mounting board 21 in its longer-side direction is the same as that described in connection with Embodiment 1.

The board-side cut 25 formed at the other end of the mounting board 21 in its longer-side direction, however, differs from that described in connection with Embodiment 1. Specifically, this board-side cut 25 has an L-shaped contour.

Of this board-side cut 25, let the shorter-side and longer-side lengths of the L-shaped contour be Sb and Lb respectively. The shorter-side length Sb is equal to the depth Ab in the bracket-shaped contour of the other board-side cut 25. Thus, the length of the shorter-side edge 21S that makes contact with the L-shaped board-side cut 25 is slightly smaller than the width Wh of the holder-side cut 15. On the other hand, the longer-side length Lb is greater than the width Wb of the bracket-shaped contour of the other board-side cut 25, but is shorter than the interval between the side walls SW4 and SW1 of the holder 11.

Owing to the formation of the board-side cut 25 having an L-shaped contour and the holder-side cut 15, the holder 11 and the mounting board 21 engage with each other. Specifically, when the holder 11 is placed over the mounting board 21, the bottom of the holder-side cut 15 is aligned with the part of the mounting face 21 U made smaller by the board-side cut 25, so that the contour of the holder-side cut 15 fits around, and thus engages with, the part of the mounting board 21 from the longer-side portion of the L-shaped contour of the board-side cut 25 to the longer-side edge 21L, the one opposite from that longer-side portion, of the mounting board 21. Thus, the holder 11 is fixed with respect to the backlight chassis 41.

Thus, also with this board-side cut 25 having an L-shaped contour, each holder 11 bridges over a plurality of mounting boards 21 connectively at one end, and thereby engages with the plurality of mounting boards 21, so as to keep the mounting boards 21 immobile with respect to the backlight chassis 41.

Thus, Embodiment 2 provides the same effect as Embodiment 1. That is, the backlight unit 49 produces backlight that contains no light amount unevenness. Moreover, in the backlight unit 49, the LED modules MJ can be fixed to the backlight chassis 41 without the use of a screw or the like for each mounting board 21, and the heat present in the LED modules MJ is rejected inexpensively. Furthermore, since the holder 11 fixes the plurality of mounting boards 21 collectively to the backlight chassis 41, the backlight unit 49 can be manufactured easily.

In a case where the mounting board 21 including a board-side cut 25 with an L-shaped contour is kept immobile with respect to the backlight chassis 41 by the holder 11, the movement of the mounting board 21 in the X direction is restricted by the contact between the side wall SW4 (specifically, the outer side face of the side wall SW4) and the shorter-side portion in the contour of the board-side cut 25. The movement of the mounting board 21 in the Y direction is restricted by the contact of the opposite edges in the contour of the holder-side cut 15 with the longer-side portion in the contour of the L-shaped board-side cut 25 and the longer-side edge 21L, the one opposite that longer-side portion, of the mounting board 21.

That is, the outer side face of the side wall SW4 and the opposite edges in the contour of the folder-side cut 15 make contact with the mounting board 21, and thereby restrict the movement of the mounting board 21 in the X and Y directions among directions within the plane of the bottom face 41 B of the backlight chassis 41. Thus, as in Embodiment 1, the side wall SW4 defining the rim of the opening HL and the holder-side cut 15 formed in the side wall SW4 constitute a first engagement portion.

Moreover, as in Embodiment 1, in the side wall SW4 including the holder-side cut 15 constituting the first engagement portion, the bottom of the folder-side cut 15 makes contact with the mounting face 21 U, and thereby restricts the movement of the mounting board 21 in the Z direction. Thus, the mounting face 21 U, the edge of the mounting boards 21, and the board-side cut 25 formed in that edge make contact with the side wall SW4, and thereby the mounting board 21 is kept immobile not only in directions within the plane of the bottom face 41B of the backlight chassis 41 but also in directions crossing those directions within the plane (as in Embodiment 1, the mounting face 21U, the edge of the mounting board 21, and the board-side cut 25 formed in that edge constitute a second engagement portion).

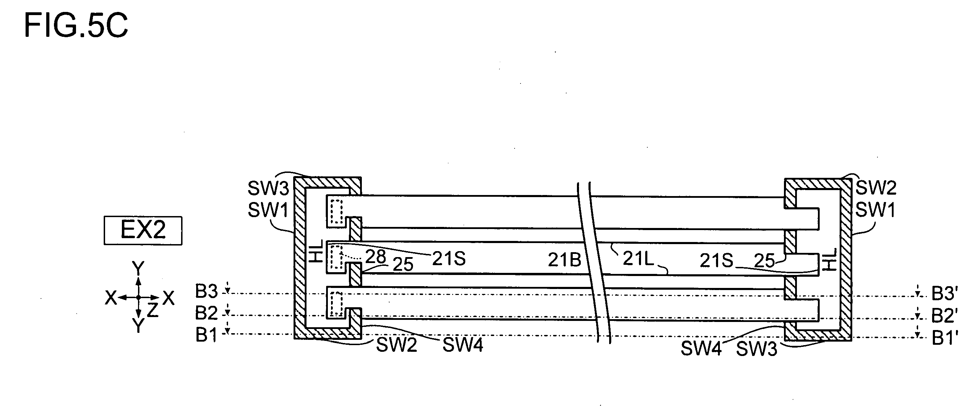

With a board-side cut 25 having an L-shaped contour, however, a single holder 11 engaging with that board-side cut 25 cannot completely prevent the mounting board 21 from moving in one of the two directions along the X direction. In practice, therefore, as shown in Fig. 5C, at one end of the mounting board 21 in its longer-side direction, a board-side cut 25 with a bracket-shaped contour is arranged, and a holder 11 engages with that board-side cut 25; at the other end of the mounting board 21 in its longer-side direction, a board-side cut 25 with an L-shaped contour is arranged, and another holder 11 engages with this board-side cut 25.

Thus, the mounting board 21 is sandwiched between two holders 11, and thereby its movement in the two directions along the X direction is restricted. Thus, the mounting board 21 is kept immobile more stably.

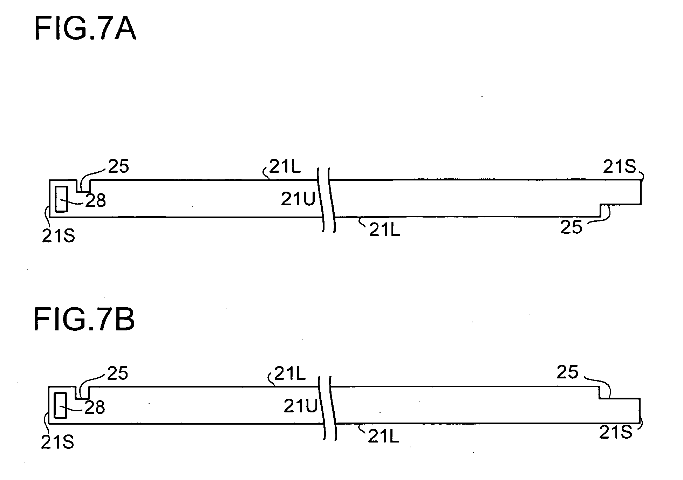

As shown in Fig. 7A, in the mounting boards 21 shown in Figs. 5A to 5C, at one end of each mounting board 21, a board-side cut 25 with a bracket-shaped contour is formed in one longer-side edge 21L; at the other end of the mounting board 21, a board-side cut 25 with an L-shaped contour is formed in the other longer-side edge 21L.

This, however, is not meant as any limitation. It is also possible, as shown in fig. 7B, to form, at one end of each mounting board 21, a board-side cut 25 with a bracket-shaped contour in one longer-side edge 21L and, at the other end of the mounting board 21, a board-side cut 25 with an L-shaped contour is formed in the same longer-side edge 21L.

### [Embodiment 3]

A third embodiment will now be described. Such members as find their functional counterparts in Embodiments 1 and 2 are identified by the same reference signs, and no overlapping description will be repeated.

In Embodiments 1 and 2, the board-side cut 25 is formed in the longer-side edge 21L of the mounting board 21. This, however, is not meant as any limitation. For example, the board-side cut 25 may be formed as an indentation that is made from the shorter-side edge 21S of the mounting board 21.

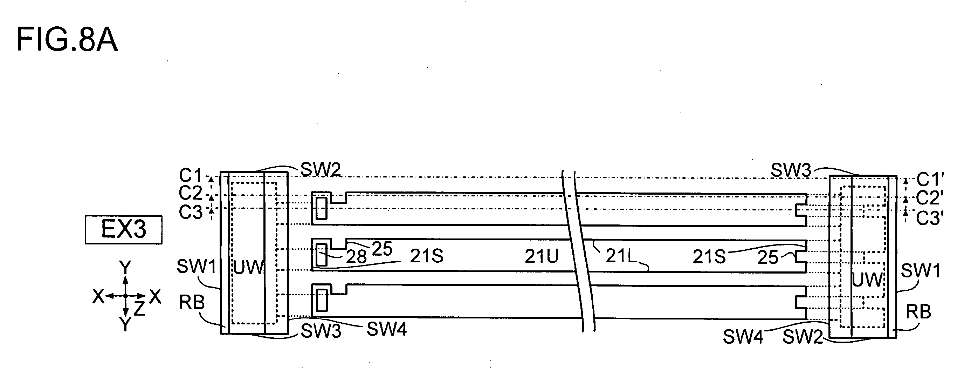

Such a board-side cut 25 will now be described with reference to Figs. 8A to 8C and 9C to 9C (the backlight unit 49 shown in these diagrams is dealt with as a third embodiment (EX 3)). Figs. 8A to 8C are views similar to Figs. 2A to 2C respectively.

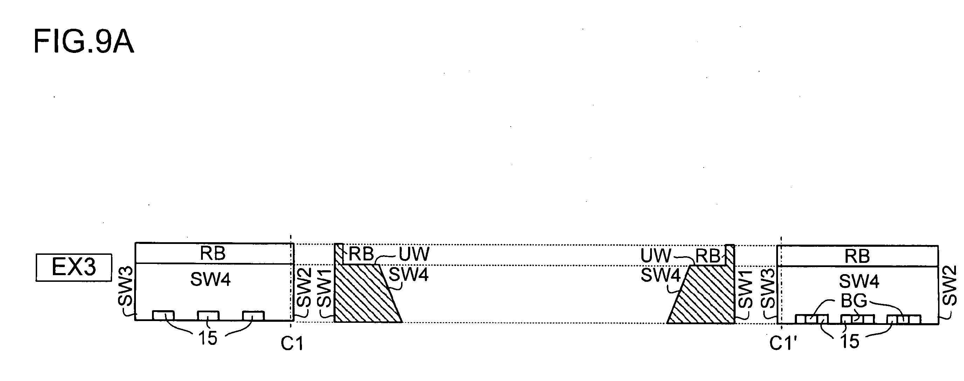

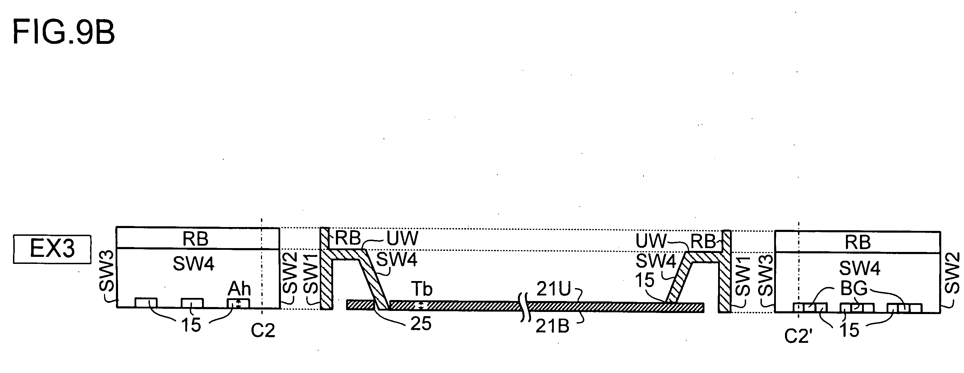

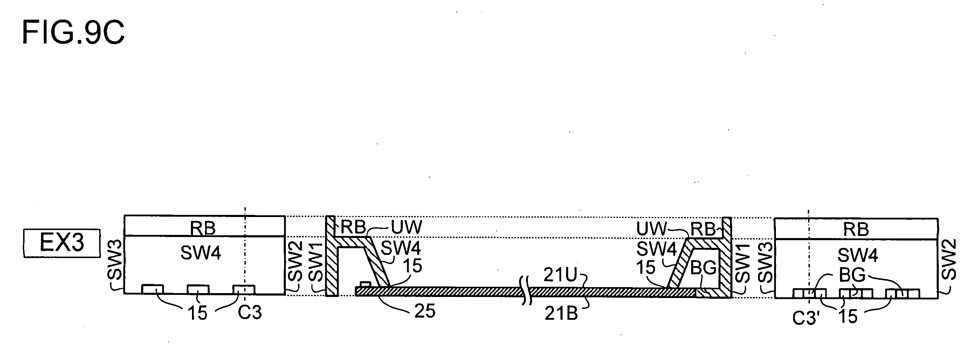

Fig. 9A is a sectional view along line C1-C1' in Figs. 8A to 8C as seen from the arrow-indicated direction. Fig. 9B is a sectional view along line C2-C2' in Figs. 8A to 8C as seen from the arrow-indicated direction. Fig. 9C is a sectional view along line C3-C3' in Figs. 8A to 8C as seen from the arrow-indicated direction (these diagrams are each accompanied with a side view of the holders, with their section indicated by hatching).

As shown in Figs. 8A to 8C and 9A to 9C, one board-side cut 25 formed in the mounting board 21 is, for example, shaped like a square bracket ("["), and is formed as an indentation that is made from one shorter-side edge 21S of the mounting board 21 toward the other shorter-side edge 21S (the width Wb of this board-side cut 25 is naturally smaller than the length of the shorter-side edge 21S of the mounting board 21).

On the other hand, like the holder-side cut 15 described in connection with Embodiments 1 and 2, the holder-side cut 15 here is, for example, shaped like a square bracket, and is formed in the side wall SW4 defining part of the opening HL. As in Embodiments 1 and 2, the depth Ah of the indentation is slightly greater than the thickness Tb of the mounting board 21; unlike in Embodiments 1 and 2, however, the width Wh of the holder-side cut 15 is slightly greater than the length of the shorter-side edge 21S of the mounting board 21.

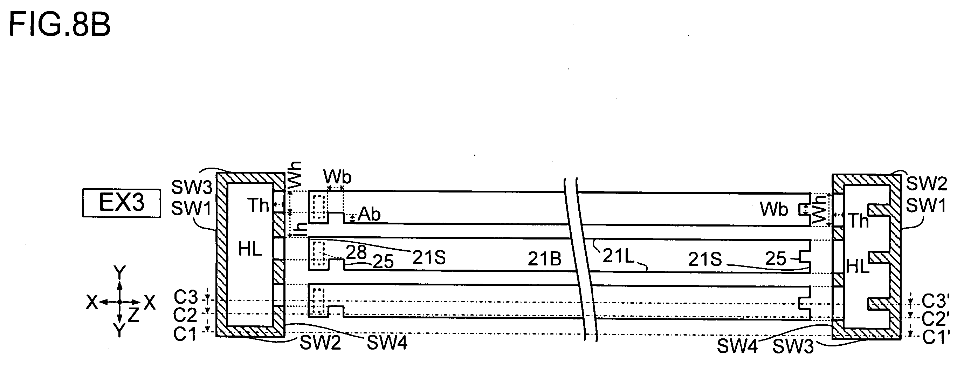

The holder 11 includes, for example as shown in Fig. 8B, a protrusion BG that protrudes from the part of the inner side face of the side wall SW1 facing the folder-side cut 15 toward the folder-side cut 15. The tip end of the protrusion BG has a width slightly smaller than the width Wb of the board-side cut 25 so that the former fits into the latter.

The holder 11 including the folder-side cut 15 and the protrusion BG described above engages with the mounting board 21 (and hence the LED module MJ).

Specifically, when the holder 11 is placed over the mounting board 21 on the backlight chassis 41, the tip of the protrusion BG is aligned with the bottom of the board-side cut 25, so that the tip of the protrusion BG fits into, and thus engages with, the contour of the board-side cut 25, and in addition the contour of the folder-side cut 15 fits around, and thus engages with, the mounting face 21U and both longer-side edges 21L. Thus, the holder 11 is fixed with respect to the backlight chassis 41.

Thus, also with a board-side cut 25 having a board-side cut 25 formed in the shorter-side edge 21S as described above, the holder 11 can bridge over a plurality of mounting boards 21 collectively at one end, and thereby engage with the plurality of mounting boards 21, so as to keep the mounting boards 21 immobile with respect to the backlight chassis 41. Thus, Embodiment 3 provides the same effect as the Embodiments 1 and 2.

In a case where a mounting board 21 including a board-side cut 25 formed in the shorter-side edge 21S is kept immobile with respect to the backlight chassis 41 by the holder 11, the movement of the mounting board 21 in the X direction is restricted by the contact between the protrusion BG (in particular, the tip end of the protrusion BG) and the bottom of the bracket-shaped board-side cut 25. The movement of the mounting board 21 in the Y direction is restricted by the contact between the protrusion BG (in particular, the side portion of the protrusion BG) and the opposite edges in the contour of the bracket-shaped board-side cut 25, and also the contact between the opposite edges in the contour of the folder-side cut 15 and the two longer-side edges 21L of the mounting board 21.

That is, the protrusion BG and the opposite edges in the contour of the folder-side cut 15 make contact with the mounting board 21, and thereby restrict the movement of the mounting board 21 in the X and Y directions among directions within the plane of the bottom face 41B of the backlight chassis 41 (the side wall SW4 defining the contour of the opening HL, the folder-side cut 15 formed in the side wall SW4, and the protrusion BG constitute a first engagement portion).

Moreover, as in Embodiments 1 and 2, in the side wall SW4 including the folder-side cut 15 constituting the first engagement portion, the bottom of the folder-side cut 15 makes contact with the mounting face 21U, and thereby restricts the movement of the mounting board 21 in the Z direction. Thus, the contact of the mounting board 21 U and the longer-side edge 21L with the folder-side cut 15, and the contact of the board-side cut 25 formed in the edge of the mounting board 21 with the protrusion BG, keep the mounting board 21 immobile not only in directions within the plane of the bottom face 41 B of the backlight chassis 41 but also in directions crossing those directions within the plane (as in Embodiments 1 and 2, the mounting face 21 U, the edge of the mounting board 21, and the board-side cut 25 formed in that edge constitute a second engagement portion).

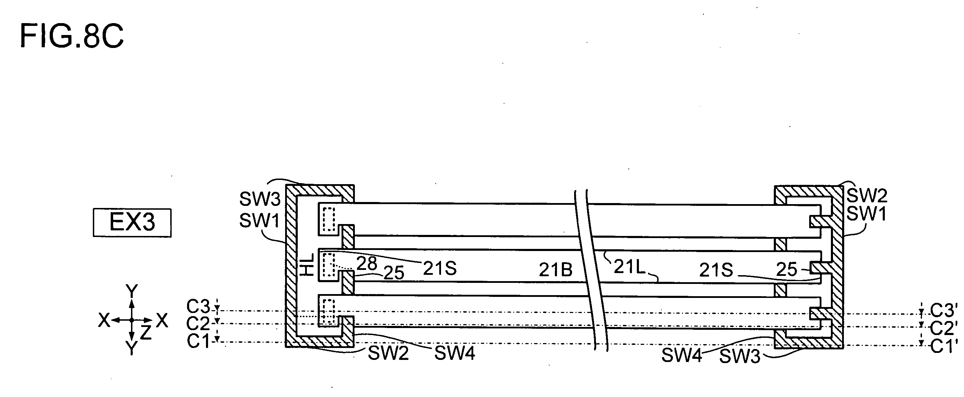

With a board-side cut 25 formed in the shorter-side edges 21S, however, as in Embodiment 2, a single holder 11 engaging with that board-side cut 25 cannot completely prevent the mounting board 21 from moving in one of the two directions along the X direction. In practice, therefore, as shown in Fig. 8C, at one end of the mounting board 21 in its longer-side direction, a board-side cut 25 with a bracket-shaped contour is arranged, and a holder 11 engages with that board-side cut 25; at the other end of the mounting board 21 in its longer-side direction, a board-side cut 25 formed in the shorter-side edge 21S is arranged, and another holder 11 (in particular, the protrusion BG) engages with this board-side cut 25.

Thus, the mounting board 21 is sandwiched between two holders 11, and thereby its movement in the two directions along the X direction is restricted. Thus, the mounting board 21 is kept immobile more stably.

The protrusion BG in the holder 11 and the board-side cut 25 in the shorter-side edge 21S may be omitted. The reason is that, even without a protrusion BG and a board-side cut 25, so long as the holder 11 has a folder-side cut 15, the contour of the folder-side cut 15 engages with the mounting face 21 U and the longer-side edge 21L of the mounting board 21 (in that case, the folder-side cut 15 constitutes a first engagement portion, and the mounting face 2 1 U and the edge (shorter-side edge 21S) of the mounting board 21 constitute a second engagement portion).

The contact between the inner side face of the side wall SW1 in a holder 11 and the shorter-side edge 21S of a mounting board 21 without a board-side cut 25 may be exploited to restrict the movement of the mounting board 21 in the X direction (in that case, the folder-side cut 15 and the side wall SW1 constitute a first engagement portion, and the mounting face 21U and the edge of the mounting board 21 (the shorter-side edge 21S and the longer-side edge 21L) constitute a second engagement portion.

### [Other Embodiments]

The present invention may be carried out in any other manner than specifically described by way of embodiments above, and many variations and modifications are possible without departing from the spirit of the invention.

Although the above description discusses different parts of the holder 11 and the mounting board 21 as the parts where they engage with each other, this is not meant as any limitation. For example, at least a side wall SW defining the rim of the opening HL or a folder-side cut 15 formed in the side wall SW has to engage with any part of the mounting board 21; reversely put, for example, at least a mounting face 21U of the mounting board 21, an edge (21L, 21S) of the mounting board 21, or a board-side cut 25 formed in the edge has to engage with any part of the holder 11.

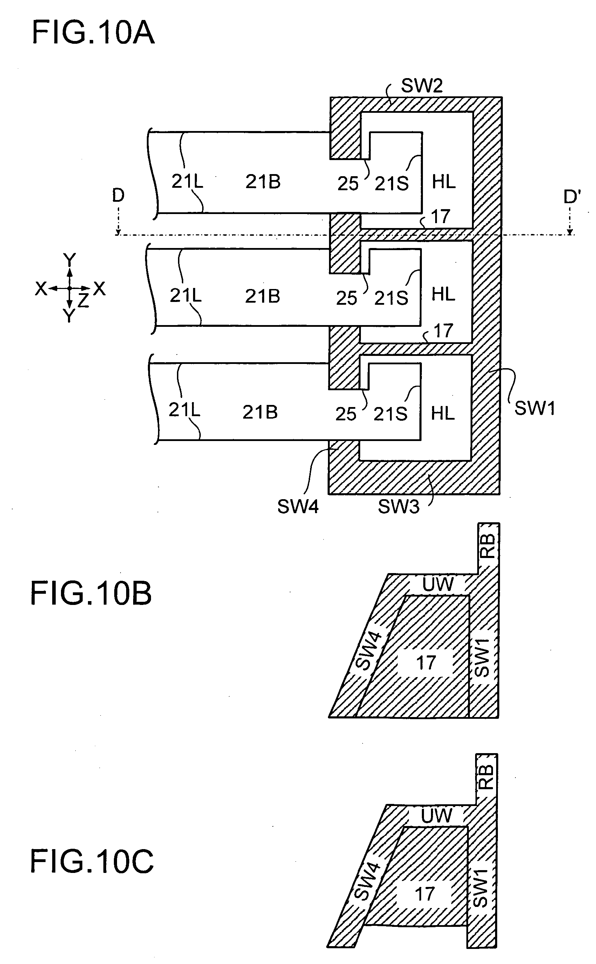

In Embodiments 1 to 3, the holder 11 T includes side walls SW1 to SW4 and a top portion UW, and thus has the shape of a lid having a hollow space inside it. This, however, is not meant as any limitation. As shown in a partial plan view (a plan view showing how the mounting board 21 is kept immobile) in Fig. 10A and a sectional view (a sectional view along line D-D in Fig. 10A as seen from the arrow-indicated direction) in Fig. 10B, the holder 11 may include a reinforcing member 17.

The reinforcing member 17 is a plate-shaped member that is disposed inside the hollow holder 11 so as to connect to the inner side face of the side wall SW1 and the inner side face of the side wall SW4 and also to the inner side face of the top portion UW.

Providing the reinforcing member 17 helps increase the rigidity of the holder 11. In particular when the reinforcing member 17 connects to the opposite inner side faces of the side walls SW1 and SW4 inside the holder 11, it bears the load on the side walls SW1 and SW4. Thus, in a case where two holders 11 sandwich the mounting board 21 from both ends in its longer-side direction and in addition the side wall SW4 is in engagement, even when the side wall SW4 is under an excessive load, the side wall SW4 does not break.

Put otherwise, when the reinforcing member 17 connects to the inner side face of the side wall SW4 and the inner side face of the top portion UW inside the holder 11, it bears the load on the side wall SW4 and the top portion UW. Thus, in a case where two holders 11 sandwich the mounting board 21 from both ends in its longer-side direction and in addition the side wall SW4 is in engagement, even when the side wall SW4 is under an excessive load, the side wall SW4 does not break.

Thus, so long as the reinforcing member 17 connects to at least two inner side faces (at least two of the side walls SW1 to SW4 and the top portion UW) inside the holder 11, the load on these inner side faces is borne by the reinforcing member as well. This makes the side walls etc. corresponding to those inner side faces less likely to break, and hence increases the rigidity of the holder 11.

As shown in Fig. 10B, the reinforcing member 17 connects to the inner side face of the side wall SW1, the inner side face of the side wall SW4, and the inner side face of the top portion UW, and in addition extends to reach the edge of the side walls SW1 and SW4 where the top portion UW is not disposed. Thus, when the opening HL of the holder 11 makes contact with the mounting face 21 U of the mounting board 21, the space inside the holder 11 is divided by the reinforcing member 17 into divided spaces that do not communicate with each other and are completely separated from one another.

As shown in Fig. 10C, however, the reinforcing member 17 does not necessarily have to extend to reach the edge of the side walls SW1 and SW4 where the top portion UW is not disposed. That is, the reinforcing member 17 may divide the space inside the holder 11 into divided spaces while allowing these divided spaces to communicate with one another. With this design, the air inside the holder 11 is less likely to stagnate. Additionally forming a hole or the like communicating with the outside in any of the side walls SW1 to SW4 and the top portion UW helps make the air inside the holder 11 still less likely to stagnate.

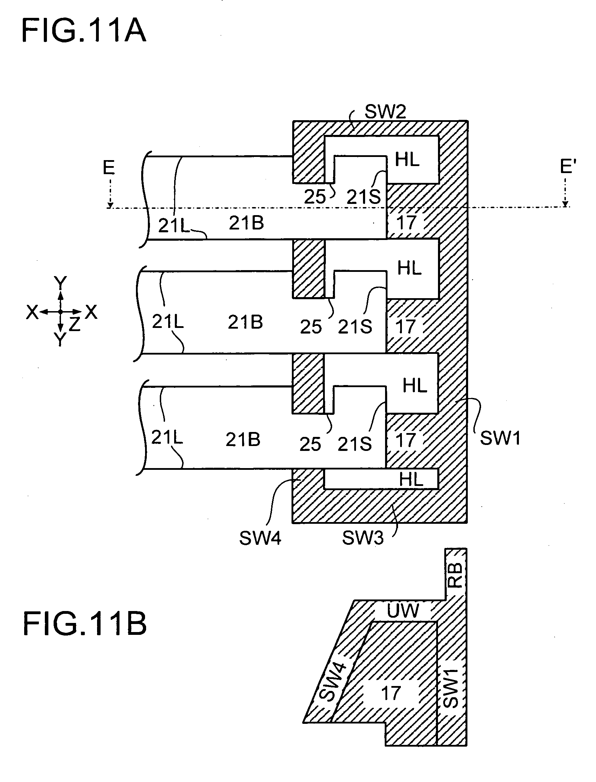

The reinforcing member 17 may have any shape. For example, the reinforcing member 17 may be shaped as shown in Figs. 11A and 11B (Fig. 11A is a view similar to Fig. 10A, and Fig. 11B is a sectional view along line E-E' in Fig. 11A as seen from the arrow-indicated direction.

Specifically, the reinforcing member 17 connects to the inner side face of the side wall SW1, the inner side face of the side wall SW4, and the inner side face of the top portion UW, and in addition overlaps the folder-side cut 15 in the side wall SW4 in position (specifically, the reinforcing member 17 overlaps the folder-side cut 15 in the XZ sectional direction). Moreover, so that the bottom of the folder-side cut 15 may make contact with the mounting face 21U of the mounting board 21 when the holder 11 is placed over the mounting board 21 on the backlight chassis 41, the reinforcing member 17 is so designed as not to make contact with the mounting face 21 U before the bottom of the folder-side cut 15 does (the reinforcing member 17 may, however, make contact with the mounting face 21 U at the same time that the bottom of the folder-side cut 15 does).

That is, as shown in Fig. 11B, a part of the reinforcing member 17 near the folder-side cut 15 (near the side wall SW4) extends from the inner side face of the top portion UW etc. but not beyond the bottom of the folder-side cut 15.

On the other hand, as shown in Fig. 11B, a part of the reinforcing member 17 away from the folder-side cut 15 (near the side wall SW1) may reach the edge of the side wall SW1 where the top portion UW is not disposed. This part of the reinforcing member 17, however, is so designed as not to make contact with the part of the mounting face 21 U of the mounting board 21 that comes inside the holder 11. Otherwise, no contact is achieved between the contour of the folder-side cut 15 and the mounting face 21 U of the mounting board 21.

As shown in Fig. 11A, the part of the reinforcing member 17 near the side wall SW1 may make contact with the part of the shorter-side edge 21S of the mounting board 21 that comes inside the holder 11. With this design, the movement of the mounting board 21 in the X direction is surely prevented. The part of the reinforcing member 17 near the side wall SW4 may have a portion flush with the bottom of the folder-side cut 15. The flush portion then surely prevents the movement of the mounting board 21 in the Z direction.

That is, the reinforcing member 17 engages with the mounting board 21 and thereby keeps the mounting board 21 immobile (thus, the reinforcing member 17 constitutes a first engagement portion which engages with the mounting board 21 and thereby keeps the mounting board 21 immobile).

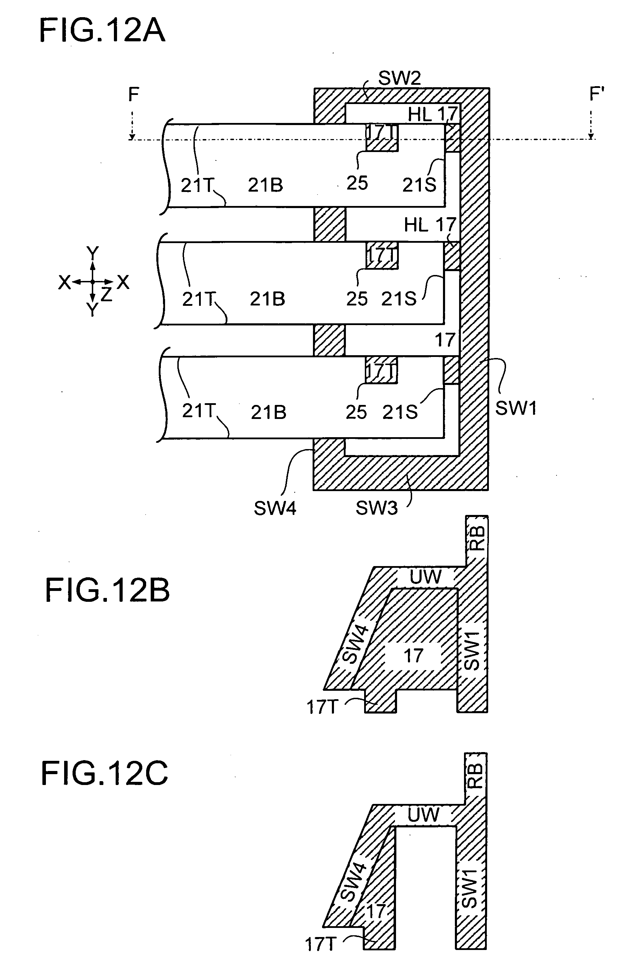

As shown in Figs. 12A and 12B, the reinforcing member 17 may include a fitting piece 17T that fits into the board-side cut 25. Spherically, as shown in Fig. 12A, a piece that fits into the board-side cut 25 may be provided contiguous with the reinforcing member 17 (Fig. 12A is a view similar to Fig. 10A, and Fig. 12B is a sectional view along line F-F' in Fig. 12 as seen from the arrow-indicated direction).

With this reinforcing member 17, when the holder 11 is placed over the mounting board 21 on the backlight chassis 41, the fitting piece 17T is aligned with the board-side cut 25, so that the fitting piece 17T fits into the board-side cut 25, and thus the contour of the folder-side cut 15 fits around, and thus engages with, the mounting face 21U and both longer-side edges 21L. Thus, the holder 11 is fixed with respect to the backlight chassis 41.

That is, also with this holder 11, it bridges over a plurality of mounting boards 21 collectively at one end (for example, at one end of the mounting board 21 in their longer-side direction), and thereby engages with the plurality of mounting boards 21, so as to keep the mounting boards 21 immobile with respect to the backlight chassis 41. Thus, this holder 11 provides the same effect as Embodiments 1 to 3.

In a case where this holder 11 keeps the mounting board 21 including the board-side cut 25 immobile with respect to the backlight chassis 41, the movement of the mounting board 21 in the X direction is restricted by the contact between the fitting piece 17T and the opposite edges in the contour of the board-side cut 25. The movement of the mounting board 21 in the Y direction is restricted by the contact between the fitting piece 17T and the bottom of the board-side cut 25, and also the contact between the opposite edges in the contour of the folder-side cut 15 and the two longer-side edges 21L of the mounting board 21.

That is, the fitting piece 17T and the opposite edges in the contour of the folder-side cut 15 make contact with the mounting board 21, and thereby restrict the movement of the mounting board 21 in the X and Y directions among directions within plane of the bottom face 41B of the backlight chassis 41 (the side wall SW4 defining the rim of the opening HL, the folder-side cut 15 formed in the side wall SW4, and the fitting piece 17T (and hence the reinforcing member 17) constitute a first engagement portion).

Moreover, as in Embodiments 1 to 3, in the side wall SW4 including the folder-side cut 15 constituting the first engagement portion, the bottom of the folder-side cut 15 makes contact with the mounting face 21U, and thereby restricts the movement of the mounting board 21 in the Z direction. Thus, the contact between the mounting face 21 U and the folder-side cut 15, and the contact between the board-side cut 25 formed in the edge of the mounting board 21 and the fitting piece 17T, keep the mounting board 21 immobile not only in directions within the plane of the bottom face 41B of the backlight chassis 41 but also in directions crossing those directions within the plane.

Although in Fig. 12A, the shorter-side edge 21S of the mounting board 21 is away from the inner side face of the side wall SW1, these may make contact with each other. With this design, the mounting board 21, which tends to move in the X direction, is surely prevented from doing so by the side wall SW1.

With a view to reducing the cost of the reinforcing member 17, and preventing stagnation of air among the spaces inside the holder 11 divided by the reinforcing member 17, as shown in Fig. 12C, the reinforcing member 17 may be so designed as to connect only to the inner side face of the side wall SW4 and the inner side face of the top portion UW and not to the inner side face of the side wall SW1.

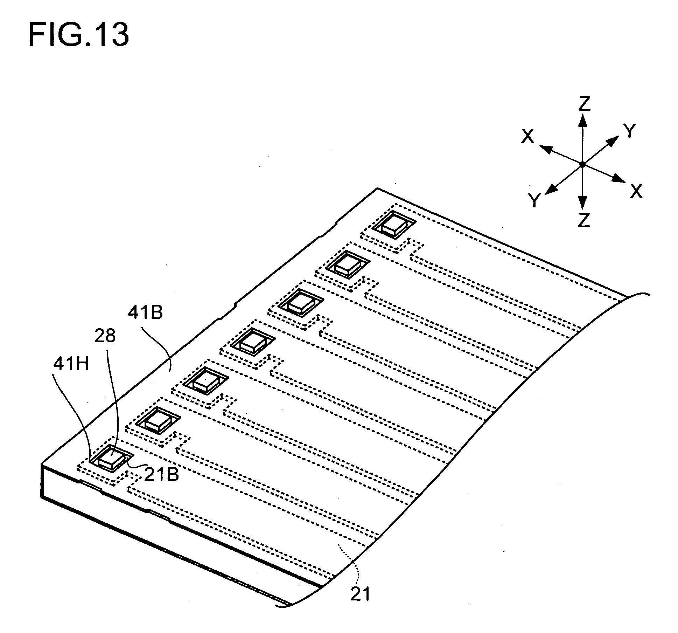

Although the above description deals with cases where the connector 28 is fitted on the mounting face 21U of the mounting board 21, the connector 28 does not necessarily have to be fitted on the mounting face 21U. For example, as shown in Fig. 13, the connector 28 may be fitted on the reverse face 21B of the mounting board 21 opposite from the mounting face 21U. In this case, as shown in Fig. 13, the connector 28 is exposed to the outside through a connector aperture 41H formed in the bottom face 41 B of the backlight chassis 41.

With this design, in the manufacturing process of the backlight unit 49, the mounting board 21 no longer needs to be reversed, and this helps increase manufacturing efficiency (that is, the backlight unit 49 then has a stacked structure, contributing to easier assembly and reworking).

In a case where the connector 28 is fitted on the reverse face 21B of the mounting board 21 as described above, terminals (an irregular reflection portion) that connect to the connector 28 may project from the mounting face 21U. Such projecting terminals may cause irregular reflection or light absorption, but are hidden by the holder 11. Thus, the backlight unit 49 produces light including no light amount unevenness.

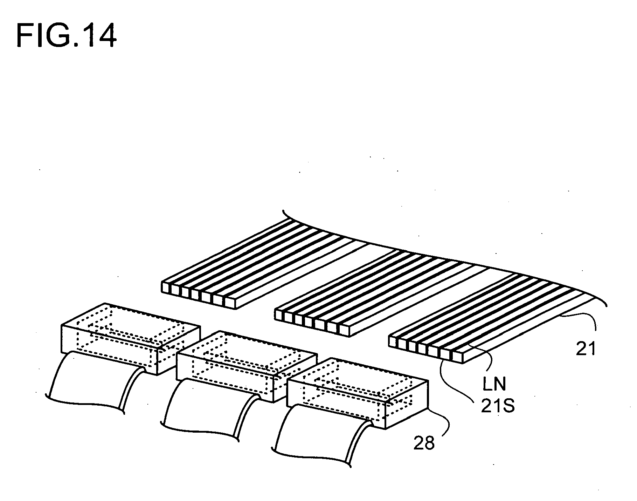

The connector 28 does not necessarily have to be of a type that is arranged on the mounting face 21U of the mounting board 21, but may be a connector of a card-edge type that fits on the edge (for example, the shorter-side edge 21S) of the mounting board 21 as shown in Fig. 14 (the reference sign LN identifies wiring laid on the mounting board 21). With this design, it is possible to reduce the number of components used in the backlight unit 49 and thereby achieve cost reduction. Although in Fig. 14, a card-edge type connector 28 is fitted to each mounting board 21, this is not meant as any limitation; for example, three connectors 28 integrated into a single piece may be fitted to three mounting boards 21 at the same time.

The connecting portion that is used to enable the wiring on the mounting board 21 to receive electric current from an external power supply is not limited to a connector 28. From the viewpoint of cost reduction, an FPC (flexible printed circuit) board may instead be fitted to the mounting board 21 by crimping.

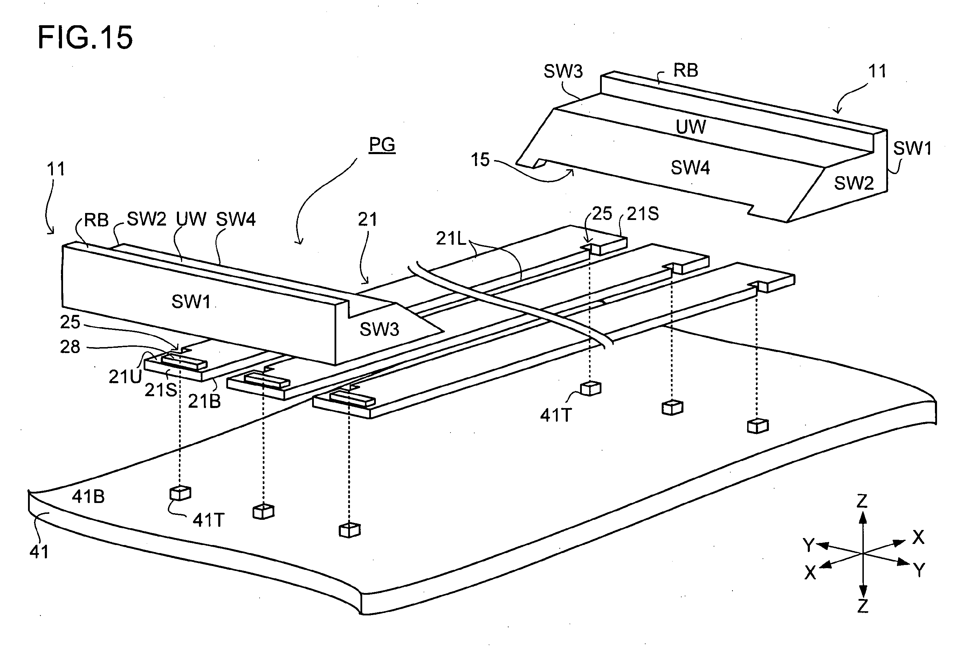

The above description deals with cases where the holder 11 has the same number of holder-side cuts 15 formed in it as there are mounting boards 21. This, however, is not meant as any limitation; as shown in Fig. 15, a single folder-side cut 15 may bridge over a plurality of mounting boards 21 collectively at one end and thereby engage with the plurality of mounting boards 21 so as to keep the mounting boards 21 immobile with respect to the backlight chassis 41.

In that case, the movement of the mounting board 21 in the Z direction can be restricted by the contact between the bottom portion of the contour of the folder-side cut 15 and the mounting face 21 U. However, the movement of the mounting board 21 in the X, Y, and like directions cannot be restricted by the contact between the bottom portion of the contour of the folder-side cut 15 and the mounting face 21U. As a remedy, as shown in Fig. 15, a projecting piece 41T is formed that projects from the bottom face 41B of the backlight chassis 41 and engages with the board-side cut 25.

There is no particular limitation on the projecting piece 41T so long as it engages with the contour of the board-side cut 25. At each end, the opposite edges in the contour of the board-side cut 25 make contact with the projecting piece 41T that engages with them, and thereby restricts the movement of the mounting board 21 in the X direction. Moreover, at one end, the bottom of the board-side cut 25 makes contact with the projecting piece 41T that engages with it, and thereby restricts the movement of the mounting board 21 in one of the two directions along the Y direction; at the other end, the bottom of the board-side cut 25 makes contact with the projecting piece 41T that engages with it, and thereby restricts the movement of the mounting board 21 in the other of the two directions along the Y direction.

That is, the mounting board 21 engages with the holder 11 and the projecting piece 41T on the backlight chassis 41, and thereby its movement in all directions including the X, Y and Z directions is restricted. In a case where the mounting board 21 is kept immobile in this way, the holder 11 has to have only one folder-side cut 15, and thus has a simple shape. This helps reduce the cost of the holder 11, and helps increase the yield of the holder 11. The projecting piece 41 T on the backlight chassis 41 serves as a member for positioning the mounting board 21, and thereby helps increase the manufacturing efficiency of the backlight unit 49.

Provided that no light amount unevenness in the backlight is likely to be caused by any part (for example, the shorter-side edge 21S) of the mounting board 21 or any other member such as the connector 28, then the holder 11 may be made compact such that it fits the mounting board 21 to the backlight chassis 41 without hiding the shorter-side edge 21S of the mounting board 21.

### List of Reference Signs

- 11: holder
- SW1-SW4: side wall
- UW: top portion
- 15: folder-side cut (first cut)
- BG: protrusion
- 17: reinforcing member (reinforcing portion)
- 17T: fitting piece
- MJ: LED module
- 21: mounting board
- 21 U: mounting face
- 21 B: reverse face opposite from mounting face
- 22: LED (light source, light-emitting element)
- 25: board-side cut (second cut)
- 28: connector (irregular reflection portion)
- 41: backlight chassis
- 41B: bottom face of backlight chassis (fitting face)
- PG: electronic package
- 42: reflective sheet
- 43: diffusive plate
- 44: prism sheet
- 45: microlens sheet
- 49: backlight unit (illuminating device)
- 59: liquid crystal display panel (display panel)
- 69: liquid crystal display device (display device)
- 89: LCD television (television receiver)

## Claims

1. An illuminating device comprising:
a light source;
a mounting board to which the light source is fitted; and
a chassis to which the mounting board is fitted,
wherein the illuminating device further includes a holder which fixes the mounting board to the chassis while covering at least an edge of the mounting board on the chassis along a shorter-side direction of the mounting board.

2. The illuminating device according to claim 1, wherein, on a face of the mounting board shielded by the holder, an irregular reflection portion is fitted.

3. The illuminating device according to claim 2, wherein the irregular reflection portion is a connector or a terminal.

4. The illuminating device according to any one of claims 1 to 3, wherein the mounting board comprises a plurality of mounting boards, and the holder bridges over the plurality of mounting boards collectively at one end thereof and thereby engages with the plurality of mounting boards so as to keep the mounting boards immobile with respect to the chassis.

5. The illuminating device according to any one of claims 1 to 4, wherein, let a face of the chassis on which the mounting board is fitted be called a fitting face, the illuminating device further includes a first engagement portion which makes contact with the mounting board and thereby restricts movement of the mounting board in at least one direction among directions within a plane of the fitting face.

6. The illuminating device according to claim 5, wherein the first engagement portion makes contact with a mounting face of the mounting board and thereby restricts movement of the mounting board away from the fitting face.

7. The illuminating device according to any one of claims 1 to 6, wherein, inside the holder, which is hollow, a reinforcing portion is formed which connects to at least two inner side faces.

8. The illuminating device according to claim 7, wherein the reinforcing portion is the first engagement portion.

9. The illuminating device according to any one of claims 6 to 8, wherein
the holder is hollow and has an opening at bottom, and
the first engagement portion is at least one of a side wall constituting a rim of the opening and a first cut formed in the side wall.

10. The illuminating device according to claim 9, wherein, let a part of the mounting board making contact with the first engagement portion be called a second engagement portion, the second engagement portion is at least one of a mounting face of the mounting board, an edge of the mounting board, and a second cut formed in the edge.

11. The illuminating device according to claim 10, wherein
the second cut comprises second cuts formed respectively at one and another of opposite ends of the mounting board, and
the first cut at the one end and the first cut at the other end have an identical shape.

12. The illuminating device according to claim 11, wherein
the second cut at the one end is formed in one of two longer sides of the mounting board along the longer-side direction thereof, and
the second cut at the other end is formed in another of the two longer sides of the mounting board along the longer-side direction thereof.

13. The illuminating device according to any one of claims 1 to 12, wherein
the holder comprises holders provided respectively at one and another of opposite ends of the mounting board, and
the mounting board is sandwiched between the holders and is thereby kept immobile.

14. The illuminating device according to any one of claims 1 to 13, wherein
inside the holder, which is hollow, a reinforcing portion is formed which connects to at least two inner side faces, and
the reinforcing portion divides a space inside the holder into divided spaces while allowing the divided spaces to communicate with one another.

15. The illuminating device according to any one of claims 1 to 14, wherein, on a mounting face of the mounting board, a light-reflecting film is formed.

16. The illuminating device according to any one of claims 1 to 15, wherein, on a mounting face of the mounting board, a first reflective sheet is laid.

17. The illuminating device according to any one of claims 1 to 16, wherein, between the mounting board and the chassis, a second reflective sheet is interposed.

18. The illuminating device according to any one of claims 1 to 17, wherein the chassis is formed of a light-reflecting material.

19. A display device comprising a display panel receiving light from the illuminating device according to any one of claims 1 to 18.

20. The display device according to claim 19, wherein the display panel is a liquid crystal display panel.

21. A television receiver comprising the display device according to claim 20.
